# EUROPÄISCHE PATENTSCHRIFT

(11) **EP 1 256 543 B1**
(45) Veröffentlichungstag und Bekanntmachung des Hinweises auf die Patenterteilung: **30.11.2011**
(21) Anmeldenummer: 02008129.5
(22) Anmeldetag: 11.04.2002
(51) Int. Cl.: B81B 1/00, B01L 3/00

(54) **Mikrofluidisches Speicher- und/oder Dosierbauteil**
Microfluidic reservoir and or dosing devices
Dispositif microfluidique de réservoir et/ou de dosage

(30) Priorität: 12.05.2001 DE 10123259
(43) Veröffentlichungstag der Anmeldung: 13.11.2002
(73) Patentinhaber: EPPENDORF AG, 22339 Hamburg (DE)
(72) Erfinder: Huhn, Rüdiger, Dipl.-Ing., 23560 Lübeck (DE); Blum, Roger, Dr. rer. nat., 20255 Hamburg (DE); Sander, Dietmar, Dr.-Ing., 20535 Hamburg (DE); Timmann, Lutz, Dipl.-Ing., 24649 Fuhlendorf (DE)
(74) Vertreter: Hauck Patent- und Rechtsanwälte

(56) Entgegenhaltungen:
- WO-A-99/37400
- DE-A1- 4 443 290
- DE-A1- 19 737 173
- PATENT ABSTRACTS OF JAPAN Bd. 1996, Nr. 12, 26. Dezember 1996 (1996-12-26) -& JP 08 219956 A (HITACHI KOKI CO LTD; HITACHI LTD), 30. August 1996 (1996-08-30)

## Beschreibung

Die Erfindung bezieht sich auf ein mikrofluidisches Speicher- und/oder Dosierbauteil.

Mikrofluidische Speicher- und/oder Dosierbauteile im Sinne dieser Anmeldung dienen dem Speichern und/oder Dosieren von Flüssigkeiten. Charakteristisch für diese mikrofluidischen Bauteile sind Mikrostrukturen, beispielsweise kapillare Kanäle oder Öffnungen, mit charakteristischen Abmessungen, zu denen z.B. der hydraulische Durchmesser der Kanäle gehört, im Bereich von 5 µm bis 1500 µm (vorzugsweise 10 µm bis 500 µm) in einer Dimension. Mikrofluidische Dosierbauteile können insbesondere Dosiervolumina im Nanoliterbereich und Mikroliterbereich aufweisen. Sie können insbesondere aus Halbleitern und/oder Kunststoffen und/oder Glas und/oder Keramik und/oder Metallen hergestellt sein, wobei geeignete Fertigungsverfahren der Mikrotechnik bzw. Mikrostrukturierung zum Einsatz kommen können, z.B. Lithographie und Ätzverfahren (bei Halbleitern) oder Liga-Verfahren (bei Metallen, Kunststoffen und Keramiken).

In der WO 99/10099 sind verschiedene Mikrodosiersysteme beschrieben, die für Dosiervolumina im Bereich von wenigen Nanolitern bis zu einigen Mikrolitern gedacht sind und mit einem Freistrahldosierer und/oder einer Mikromembranpumpe arbeiten. Eines dieser Mikrodosiersysteme hat eine in Mikrosystemtechnik ausgeführte Dosier- und Reagenzeinheit. Diese hat ein Reservoir mit einem Filter für einen Druckausgleich mit der Umgebung und eine damit über eine Leitung verbundene Mikromembranpumpe und/oder Freistrahldosierer. Ferner hat sie ein außen vorstehendes Abgaberöhrchen mit einer Dosieröffnung. Außerdem ist eine Dosiersteuerung für die Mikromembranpumpe vorhanden. Die Dosier- und Reagenzeinheit ist in eine Aufnahme im Fußbereich eines Gehäuses einsetzbar, so dass das Abgaberöhrchen axial über den Fußbereich hinaussteht. Die Dosiersteuerung ist mit einem fest im Gehäusefuß angeordneten optischen Sensor verbunden, der dem Abgaberöhrchen der einsetzbaren Dosier- und Reagenzeinheit zugeordnet ist.

Dieses Dosiersystem wird durch Einsetzen einer mit einem Reagenz (z.B. einem Enzym) vorgefüllten Dosier- und Reagenzeinheit in die Aufnahme des Gehäuses für den Betrieb vorbereitet. Beim ersten Dosierschritt pumpt die Mikromembranpumpe Flüssigkeit aus dem Reservoir bis der Sensor den Meniskus detektiert und damit eine definierte Nullstellung erreicht. Danach wird die Dosiermenge über das bekannte Schlagvolumen der Mikromembranpumpe gesteuert. Wenn die Dosier- und Reagenzeinheit geleert ist, wird sie durch eine neue, vorbefüllte Einheit ausgetauscht.

Ferner offenbart diese Druckschrift ein Mikrodosiersystem mit einem ein Kapillarausgleichssystem aufweisenden Reservoir, einem Freistrahldosierer, dessen Eingang mit dem Kapillarausgleichssystem verbunden ist, einer mit dem Ausgang des Freistrahldosierers verbundenen Dosieröffnung und einer mit dem Freistrahldosierer in Wirkverbindung stehenden Dosiersteuerung. Das Kapillarausgleichssystem dient der Speicherung und dem kapillaren Transport der Flüssigkeit aus dem Reservoir in den Freistrahldosierer. Darüber hinaus kann es dem Ausgleich von Schwankungen der Umgebungsbedingungen wie Luftdruck und Temperatur und des vom Freistrahldosierer verbrauchten Flüssigkeitsvolumens dienen. Das Kapillarausgleichssystem verhindert, dass bei Beschleunigung, beispielsweise bei einem Sturz des Reservoirs, im gespeicherten Flüssigkeitsvolumen Blasen auftreten, die den Dosierprozeß stören können. Das Kapillarausgleichssystem kann an zumindest einem, von der Verbindung mit dem Freistrahldosierer entfernten Punkt belüftet sein, damit ein Ausströmen von Flüssigkeit durch Nachströmen von Luft ausgeglichen wird. Die Kapillarkräfte verhindern dann zugleich, dass das Reservoir ausläuft. Auch das zuvor beschriebene Mikrodosiersystem kann ein solches Kapillarausgleichssystem aufweisen.

Bei den vorbeschriebenen Mikrodosiersystemen kann es immer noch zum Auslaufen von Flüssigkeit oder zur Blasenentstehung mit einhergehenden Flüssigkeitsverlusten und Fehldosierungen kommen.

Aus der DE 44 43 290 A1 ist eine Mikrodosiervorrichtung bekannt, die einen kapillaren Steigkanal aufweist, der ein Reservoir und eine Verdrängerkammer miteinander verbindet.

Davon ausgehend liegt der Erfindung die Aufgabe zugrunde, ein mikrofluidisches Speicher- und/oder Dosierbauteil zu schaffen, bei dem die kontrollierte Speicherung und Abgabe von Flüssigkeit weiter verbessert ist.

Die Aufgabe wird durch ein mikrofluidisches Speicher- und Dosierbauteil - nachstehend auch "Bauteil" genannt - gelöst, dessen Merkmale in Anspruch 1 angegeben sind. Vorteilhafte Ausgestaltungen dieses Bauteiles sind in den Unteransprüchen angegeben.

Bei den Lösungen beziehen sich die Angaben "unten", "oben", "auf demselben Niveau" oder "auf derselben Höhe" auf eine Ausrichtung des mikrofluidischen Speicher- und Dosierbauteils beim Dosieren mit dem Dosierausgang senkrecht nach unten, was einer häufigen Ausrichtung des Bauteiles für den Austritt von Flüssigkeit aus dem Dosierausgang entspricht, der durch Ablaufen von Flüssigkeit oder im Freistrahl erfolgen kann. Grundsätzlich kann das Bauteil bei Benutzung eine beliebige Ausrichtung haben, insbesondere bei Abgabe im Freistrahl.

Ferner beziehen sich bei den Lösungen die Angaben "kapillare Hohlräume", "kapillarer Steigkanal", "kapillarer Befüllkanal", "Kapillarkanäle" oder "Kapillaiverbindungen" - nachstehend "Kapillarstrukturen" genannt -auf Hohlräume (z.B. Kanäle oder Poren), Kanäle (z.B. in Form von Spalten, Schlitzen oder Röhrchen) oder Verbindungen (z.B. Kanäle oder Poren), in denen benetzende Flüssigkeiten aufsteigen bzw. in einer Richtung strömen bzw. durch Kapillarkräfte gehalten werden und in denen sich bei Befüllung mit benetzenden Flüssigkeiten ein erhöhter Kapillardruck an der Grenzfläche zu Luft oder einem anderen Gas einstellt. Das Ausmaß dieser Kapillareffekte kann vor allem durch die Abmessungen der Kapillarstrukturen, beeinflußt werden, aber auch durch ihre Materialien bzw. Oberflächenbeschaffenheiten. Die Neigung der Kapillarstrukturen zu diesen Kapillareffekten wird nachfolgend vereinfachend als "Kapillarität" bezeichnet.

Die Lösung betrifft ein mikrofluidisches Speicher- und Dosierbauteil mit
- einem Reservoir mit einer Belüftungsöffnung und einem unten angeordneten Ausgang für Flüssigkeit,
- kapillaren Hohlräumen im Reservoir,
- einer zumindest teilweise auf demselben Niveau wie das Reservoir angeordneten Verdrängerkammer mit einem oben angeordneten Eingang und einem unten angeordneten Dosierausgang für Flüssigkeit und
- einem den Ausgang des Reservoirs mit dem Eingang der Verdrängerkammer verbindenden kapillaren Steigkanal.

Die kapillaren Hohlräume im Reservoir bewirken bereits eine Reduzierung des Druckes der Flüssigkeit im Dosierausgang. Zusätzlich wird der Druck der Flüssigkeit im Dosierausgang dadurch reduziert, dass das Reservoir und die Verdrängerkammer zumindest teilweise auf demselben Niveau angeordnet sind, da dies den hydrostatischen Druck der Flüssigkeit vermindert. Vorzugsweise sind die kapillaren Hohlräume und die Niveaus von Reservoir und Verdrängerkammer so ausgelegt, dass der Kapillardruck der Flüssigkeit im Reservoir mindestens dem hydrostatischen Druck der Flüssigkeit im Dosierausgang entspricht. Der gesamte Druck der Flüssigkeit im Dosierausgang entspricht dann maximal dem Umgebungsdruck, so dass Flüssigkeit selbsttätig nicht ausläuft.

Das Reservoir und/oder die Verdrängerkammer erstrecken sich vorzugsweise jeweils über eine bestimmte Höhe. Einbezogen in die Erfindung ist, dass das Reservoir und/oder die Verdrängerkammer nur in Teilbereichen ihrer gesamten Höhe auf demselben Niveau angeordnet sind. Vorzugsweise sind das Reservoir und die Verdrängerkammer entlang ihrer gesamten Höhe im wesentlichen auf demselben Niveau angeordnet.

Bei vertikaler Ausrichtung des Bauteils steigt die Flüssigkeit aus dem Reservoir in den Steigkanal nach dem Prinzip kommunizierender Röhren auf. Unabhängig vom Füllstand des Reservoirs ist auch bei vertikaler Ausrichtung des Bauteils die Flüssigkeitszufuhr aus dem Reservoir in die Verdrängerkammer durch den Aufstieg der Flüssigkeit im kapillaren Steigkanal aufgrund des Kapillareffektes sichergestellt. Der Übergang von Flüssigkeit vom Reservoir durch den Steigkanal in die Verdrängerkammer funktioniert in beliebiger Ausrichtung des Bauteils, so dass dieses in beliebiger Ausrichtung betrieben werden kann. Ferner sichern die kapillaren Hohlräume und der kapillare Steigkanal die vollständige, blasenfreie Befüllung von Reservoir, Steigkanal und Verdrängerkammer mit Flüssigkeit und wirken dem Entstehen von Blasen aufgrund von Stößen gegen das Bauteil entgegen.

Gemäß einer weiteren Ausgestaltung ist zwischen Steigkanal und Eingang der Verdrängerkammer ein Verbindungskanal angeordnet, dem ein Füllstandssensor zugeordnet ist. Mit dem Füllstandssensor kann die vollständige Befüllung der Verdrängerkammer mit Flüssigkeit überwacht werden, um Fehldosierungen zu vermeiden. Bei dem Füllstandssensor kann es sich insbesondere um einen optischen Sensor handeln, der Blasen und/oder Flüssigkeit oder die Phasengrenze dazwischen detektiert.

Gemäß einer weiteren Ausgestaltung ist der kapillare Steigkanal seitlich über einen kapillaren Spalt mit dem Reservoir verbunden, wobei der kapillare Spalt so ausgelegt ist, dass im Dosierbetrieb Flüssigkeit im wesentlichen vom Ausgang des Reservoirs durch den kapillaren Steigkanal in die Verdrängerkammer strömt und dass bei Anordnung des Bauteils in einem entgegen der Strömungsrichtung im Steigkanal bei Dosierbetrieb gerichteten Zentrifugalfeld Flüssigkeit aus der Verdrängerkammer und dem Steigkanal durch den Spalt in das Reservoir strömt.

Hierdurch ist es möglich, Blasen aus den flüssigkeitsführenden Bereichen des Bauteils zu entfernen, insbesondere aus der Verdrängerkammer und dem Steigkanal. Hierzu kann die gesamte Flüssigkeit aus der Verdrängerkammer, dem Steigkanal und dem Reservoir durch Zentrifugieren des Bauteils oben im Reservoir gesammelt werden, um im Anschluß eine Neubefüllung des Steigkanals, des Reservoirs und der Verdrängerkammer durchzuführen. Dies ist insofern problematisch, als sich das Reservoir und die Verdrängerkammer zumindest teilweise auf der gleichen Höhe befinden und der unten am Reservoir angeordnete Ausgang mit dem oben an der Verdrängerkammer angeordneten Eingang verbunden ist. Dies steht grundsätzlich einer Ansammlung der gesamten Flüssigkeit aus dem System durch Zentrifugieren entgegen. Dieses Problem wird durch die fluidische Anbindung des Steigkanals und damit der Verdrängerkammer über den seitlichen Spalt erhöhter Kapillarität an das Reservoir gelöst. Durch den erhöhten Kapillardruck der Flüssigkeit im Spalt ist sichergestellt, dass der Steigkanal beim Dosierbetrieb wie ein seitlich geschlossener Kanal wirkt, durch den Flüssigkeit praktisch nur vom Ausgang des Reservoirs in den Eingang der Verdrängerkammer gelangt. Beim Zentrifugieren erhöhen sich die auf die Flüssigkeit im Steigkanal wirkenden Gewichtskräfte derart, dass der Kapillardruck im Spalt die Flüssigkeit nicht mehr an einem Austritt in das Reservoir zu hindern vermag. Beim Zentrifugieren wirkt der Steigkanal also wie ein seitlich offener Kanal, durch dessen Spalt Flüssigkeit aus der Verdrängerkammer und dem Steigkanal in das Reservoir gedrückt wird. Durch anschließendes Umdrehen des Bauteiles werden der Steigkanal und die kapillaren Hohlräume des Reservoirs erneut blasenfrei mit Flüssigkeit befüllt. Über den Steigkanal findet überdies eine blasenfreie Neubefüllung der Verdrängerkammer statt.

Bevorzugt mündet der Spalt zumindest teilweise in einem Bereich des Reservoirs oberhalb der kapillaren Hohlräume. In diesem Bereich kann Flüssigkeit beim Zentrifugieren aus dem kapillaren Steigkanal direkt in den oberen Bereich des Reservoirs austreten, um sich dort zu sammeln, ebenso wie die Flüssigkeit aus den kapillaren Hohlräumen des Reservoirs. Obgleich im oberen Bereich des Reservoirs infolge der Belüftungsöffnung Umgebungsdruck herrscht, wird der kapillare Steigkanal im Dosierbetrieb oben durch den Kapillardruck der Flüssigkeit im Spalt seitlich gegen das Reservoir abgedichtet. Dies ist solange der Fall, wie der Kapillardruck im Spalt den Unterdruck in einem angrenzenden Ort im kapillaren Steigkanal übersteigt.

Der Unterdruck im kapillaren Steigkanal, d.h. die Differenz des Druckes im Steigkanal zum Umgebungsdruck, setzt sich zusammen aus einem hydrostatischen Druckanteil aufgrund der Höhe des kapillaren Steigkanals, aus einem Druckverlustanteil aufgrund der Strömung der Flüssigkeit im kapillaren Steigkanal und aus einem Kapillardruckanteil, der auf den entgegengesetzt wirkenden Kapillaritäten der kapillaren Hohlräume des Reservoirs und des kapillaren Steigkanals beruht. Der Unterdruck im kapillaren Steigkanal ist abhängig von der Höhe des betrachteten Ortes im Steigkanal. Infolgedessen kann der Kapillardruck im Spalt entlang der Höhe des Spaltes unterschiedlich sein. Gemäß einer vorteilhaften Ausgestaltung erhöht sich deshalb die Kapillarität des kapillaren Steigkanals vom Ausgang des Reservoirs zum oberen Ende des kapillaren Steigkanals, vorzugsweise indem sich die Breite des Spaltes von unten nach oben vermindert. Da der Unterdruck im kapillaren Steigkanal auch vom Volumenstrom der Flüssigkeit abhängt, ergibt sich für einen bestimmten Spalt eine obere Grenze für den Volumenstrom beim Dosieren, bei dem der Kapillardruck im Spalt den Steigkanal seitlich abdichtet.

Gemäß einer vorteilhaften Ausgestaltung weist das Bauteil oben eine mit dem Reservoir verbundene Befüllöffnung auf. Diese ermöglicht ein Befüllen des Reservoirs mit Flüssigkeit und außerdem eine komplette Entleerung des Reservoirs nach dem Zentrifugieren, beispielsweise um Restflüssigkeit wiederzugewinnen. Die Befüllöffnung kann nach dem Befüllen dauerhaft oder öffenbar verschlossen werden. Vorzugsweise ist ein kapillarer Befüllkanal zwischen Befüllöffnung und Steigkanal angeordnet. Hierdurch ist es möglich, beim Befüllen zunächst den Steigkanal zu benetzen und anschließend das Reservoir zu befüllen. Hierdurch können Lufteinschlüsse in den flüssigkeitsführenden Bereichen des Bauteils vermieden werden. Der Befüllkanal kann ebenfalls einen seitlichen Spalt aufweisen, über den er befüllbar ist.

Gemäß einer vorteilhaften Ausgestaltung sind Reservoir und Verdrängerkammer im wesentlichen in parallelen Schichten mindestens eines flachen Körpers angeordnet, wodurch eine sehr kompakte Bauweise ermöglichst wird. Gemäß einer weiteren Ausgestaltung ist der Steigkanal in derselben Schicht wie das Reservoir und gemäß noch einer Ausgestaltung ist der Verbindungskanal in derselben Schicht wie die Verdrängerkammer angeordnet. Die Flüssigkeit kann vom Steigkanal in den Eingang der Verdrängerkammer bzw. in den Verbindungskanal durch einen Durchgang des flachen Körpers gelangen, der quer zu den parallelen Schichten ausgerichtet ist.

Vorzugsweise ist der Dosierausgang in der einen Stirnseite und/oder die Befüllöffnung in der anderen Stirnseite des mindestens einen flachen Körpers angeordnet.

Gemäß einer weiteren vorteilhaften Ausgestaltung ist das Bauteil aus mehreren aufeinanderliegenden flachen Körpern aufgebaut. Die aufeinanderliegenden Körper können an den Trennebenen miteinander verbunden sein. Gemäß einer weiteren Ausgestaltung ist das Bauteil aus drei aufeinanderliegenden Körpern aufgebaut. Vorzugsweise ist das Reservoir und/oder der Steigkanal und/oder Befüllkanal auf der einen großflächigen Seite eines flachen Grundkörpers, die Verdrängerkammer und/oder der Verbindungskanal auf der anderen großflächigen Seite des flachen Grundkörpers, der quergerichtete Durchgang in Querrichtung im flachen Grundkörper, der Dosierausgang in der einen Stirnseite und/oder die Befüllöffnung in der anderen Stirnseite des flachen Grundkörpers angeordnet, ist der Grundkörper auf der Seite des Reservoirs von einem Reservoirdeckel und auf der Seite der Verdrängerkammer von einem Membrandeckel geschlossen. Gemäß einer weiteren Ausgestaltung enthält der Reservoirdeckel teilweise das Reservoir und/oder den Steigkanal und/oder den Befüllkanal und/oder der Membrandeckel teilweise die Verdrängerkammer und/oder den Verbindungskanal.

Gemäß einer Ausgestaltung hat das mikröfluidische Speicher- und Dosierbauteil
- das Reservoir mit der Belüftungsöffnung und dem Ausgang für Flüssigkeit und
- in dem Reservoir angeordnete, zum Ausgang des Reservoirs führende, parallele Kapillarkana̅le und quer zu den Kapillarkanälen gerichtete, benachbarte Kapillarkanäle miteinander verbindende und mit dem Ausgang verbundene Kapillarverbindungen, deren Kapillarität die der Kapillarkanäle übersteigt.

In den Kapillarkanälen wird die Flüssigkeit durch Kapillarkräfte gehalten und läuft unabhängig von der Lage des Bauteils nicht aus. In den Kapillarverbindungen wird die Flüssigkeit durch noch höhere Kapillarkräfte als in den Kapillarkanälen gehalten, da die Kapillarverbindungen eine Kapillarität aufweisen, die diejenige der Kapillarkanäle übersteigt. Außerdem verhindern die Kapillarkanäle und die Kapillarverbindungen den Einschluß bzw. das Entstehen von Blasen im Reservoir. Wenn es trotzdem, beispielsweise aufgrund eines starken Stoßes, zur Blasenbildung kommt, so erfolgt diese bevorzugt in den Kapillarkanälen, wo die Kapillarität geringer ist. Durch Blasen werden demnach nur Flüssigkeitssäulen in den Kapillarkanälen unterbrochen. Die Flüssigkeitssäulen in den Kapillarverbindungen bleiben hingegen erhalten. Hierdurch ist sichergestellt, dass ununterbrochen Flüssigkeit aus dem Ausgang des Reservoirs abgezogen werden kann. Die Blasen können in den Kapillarkanälen leicht emporsteigen, wobei die von den Blasen verdrängte Flüssigkeit in die Kapillarverbindungen ausweichen kann und die von den Blasen eingenommenen Volumina durch Flüssigkeit aus den Kapillarverbindungen aufgefüllt werden können. Das Reservoir begünstigt damit eine selbsttätige Entgasung.

Das Bauteil kann ausschließlich als Reservoir ausgeführt sein, für vielfältige Einsatzzwecke insbesondere in mikrofluidischen Systemen (z.B. PCR, lab on chip usw.). Ferner kann es ein kombiniertes Speicher- und Dosierbauteil sein. Hierfür kann gemäß einer Ausgestaltung der Ausgang des Reservoirs eine Verbindung mit einem Eingang einer Verdrängerkammer mit einem Dosierausgang für Flüssigkeit aufweisen.

Gemäß einer bevorzugten Ausgestaltung sind die Kapillarkanäle durch parallele Lamellen und die Kapillarverbindungen durch quergerichtete Verbindungsspalte zwischen den Lamellen gebildet. Das Reservoir kann dann einfach durch Zusammenfügen zweier flacher Körper gebildet werden, von denen jeder Lamellen trägt, die bei Verbindung der flachen Körper miteinander fluchten. So kann das Reservoir beispielsweise mittels zweier flacher Körper, von denen Lamellen vorstehen und mittels eines dazwischen angeordneten Rahmens gebildet werden.

Gemäß einer bevorzugten Ausgestaltung weist das Bauteil einen flachen Grundkörper auf, der auf einer Seite von dem Boden einer einen Teil des Reservoirs bildenden Vertiefung vorstehende Lamellen aufweist und einen auf dieser Seite des Grundkörpers angeordneten Reservoirdeckel aufweist, der von dem Boden einer einen zweiten Teil des Reservoirs bildenden Vertiefung vorstehende Lamellen aufweist, wobei die Lamellen des Grundkörpers und die Lamellen des Reservoirdeckels miteinander fluchten und zwischen den Lamellen des Grundkörpers und den Lamellen des Reservoirdeckels die quergerichteten Kapillarverbindungen vorhanden sind. Hierdurch ist es grundsätzlich möglich, das Reservoir aus nur zwei flachen Körpern zu bilden.

Bevorzugt sind die Kapillarverbindungen in der Trennebene zwischen dem Grundkörper und dem Reservoirdeckel angeordnet. Insbesondere können die Lamellen eines der beiden Körper genau bis zur Trennebene erstreckt sein.

Gemäß einer Ausgestaltung hat das mikrofluidische Speicher- und Dosierbauteil
- das Reservoir mit der Belüftungsöffnung und dem Ausgang für Flüssigkeit,
- in dem Reservoir angeordnete, zum Ausgang führende Kapillarkanäle und
- Absätze an den Enden der Kapillarkanäle, in denen Austrittsöffnungen des Ausgangs für Flüssigkeit angeordnet sind, die einen geringeren Querschnitt als die Kapillarkanäle haben.

Auch bei diesem Bauteil wird die Flüssigkeit von den Kapillarkräften in den Kapillarkanälen gehalten, unabhängig von der Ausrichtung des Bauteils. Zudem wirken die Kapillarkanäle der Bildung von Blasen entgegen. Falls dennoch Blasen entstehen, verhindert diese Lösung, dass diese mit der Flüssigkeit aus dem Ausgang des Reservoirs austreten und die Verwendung der Flüssigkeit beeinträchtigen. Dies wäre beispielsweise beim Dosieren der Flüssigkeit mittels einer Verdrängerkammer der Fall, weil bei der Verdrängung zunächst die: Gasblasen kollabieren, so dass entweder überhaupt keine Flüssigkeit abgegeben wird oder die abgegebene Flüssigkeitsmenge nicht der gewünschten Dosiermenge entspricht. Das Rückhalten der Gasblasen in den Kapillarkanälen beruht darauf, dass diese eine Tendenz haben, sich an den Wänden der Kapillarkanäle anzulagern und sich nicht in einem Abstand von den Wänden aufzuhalten, wo sich die Austrittsöffnungen in den Absätzen an den Enden der Kapillarkanäle befinden. Da sich die Gasblasen eher selten direkt vor den Austrittsöffnungen befinden, gelangen sie entsprechend selten in den Ausgang.

Auch dieses Bauteil kann ausschließlich als Reservoir ausgeführt sein, für vielfältige Einsatzzwecke, insbesondere in mikrofluidischen Systemen (z.B. PCR, lab on chip usw.). Ferner kann es ein kombiniertes Speicher- und Dosierbauteil sein. Hierfür kann gemäß einer Ausgestaltung der Ausgang eine Verbindung mit einem Eingang einer Verdrängerkammer mit einem Dosierausgang für Flüssigkeit aufweisen.

Gemäß einer weiteren Ausgestaltung sind die Kapillarkanäle parallel und/oder geradlinig. Hierdurch wird das Entgasen des Reservoirs durch Aufstieg der Blasen begünstigt.

Die Austrittsöffnungen können vorteilhaft in einer Trennebene zwischen übereinandergeschichteten, flachen Körpern ausgebildet sein. Bei einer vorteilhaften Ausgestaltung weist ein flacher Grundkörper auf einer Seite einen Teil des Reservoirs und ein auf dieser Seite angeordneter Reservoirdeckel einen weiteren Teil des Reservoirs auf und weist der Absatz einen Teil auf dem Grundkörper und einen weiteren Teil auf dem Reservoirdeckel auf.

Das Bauteil gemäß der dritten Lösung kann vorteilhaft mit den Merkmalen einer oder mehrerer anderer Lösungen ausgestaltet werden. Das Patentbegehren bezieht alle möglichen Varianten ein.

Bei sämtlichen Lösungen weist das Reservoir eine Belüftungsöffnung auf, die einen Druckausgleich zwischen dem Luftvolumen im Reservoir und der Umgebung gewährleistet. Anderenfalls würde im Reservoir beim Austritt von Flüssigkeit, z.B. beim Dosieren, ein Unterdruck entstehen, der dem Flüssigkeitsaustritt entgegenwirken würde. Außerdem würden Schwankungen der Umgebungsbedingungen (Druck/Temperatur) zu einem Auslaufen von Flüssigkeit oder Ansaugen von Luft durch den Dosierausgang bzw. den Ausgang des Reservoirs führen. Ein Benetzen oder ein Verschließen der Belüftungsöffnung durch Flüssigkeit würde diese in ihrer Funktion beeinträchtigen, da hierdurch der Druckausgleich behindert würde. Außerdem könnte durch die Belüftungsöffnung Flüssigkeit nach außen gelangen. Grundsätzlich kann dies Vermieden werden durch Ausrichtung des Bauteils so, dass Flüssigkeit aus dem Reservoir nicht in die Belüftungsöffnung eintritt. Ferner dadurch, dass kapillare Hohlräume im Reservoir die Flüssigkeit zurückhalten, so dass sie nicht in die Belüftungsöffnung gelangt. Hierdurch kann jedoch nicht immer ein Flüssigkeitsaustritt durch die Belüftungsöffnung verhindert werden.

Gemäß einer Ausgestaltung hat das Speicher- und Dosierbauteil
- das Reservoir, das die Belüftungsöffnung und dem Ausgang für Flüssigkeit aufweist,
- wobei die Belüftungsöffnung an einem zentralen Ort im Reservoir in einem Abstand von Begrenzungswänden des Reservoirs angeordnet ist, so dass bei beliebiger Ausrichtung des mit einer maximal zulässigen Flüssigkeitsmenge gefüllten Reservoirs keine Flüssigkeit durch die Belüftungsöffnung nach außen austritt.

Die maximal zulässige Flüssigkeitsmenge unterschreitet das Gesamtvolumen des Reservoirs. Sie ist so bemessen, dass bei beliebiger Ausrichtung des Reservoirs die Flüssigkeit nicht in die Belüftungsöffnung eintreten kann, die sich in einem Abstand von den Begrenzungswänden des Reservoirs befindet.

Auch dieses Bauteil kann ausschließlich als Reservoir ausgeführt sein für vielfältige Einsatzzwecke, insbesondere in mikrofluidischen Systemen (z.B. PCR, lab on chip usw.). Ferner kann es ein kombiniertes Speicher- und Dosierbauteil sein. Hierfür kann gemäß einer Ausgestaltung der Ausgang des Reservoirs eine Verbindung mit dem Eingang einer Verdrängerkammer mit einem Dosierausgang für Flüssigkeit aufweisen.

Ferner kann das Reservoir einen Teil mit kapillaren Hohlräumen und einen von kapillaren Hohlräumen freien Teil aufweisen, in dem die Belüftungsöffnung angeordnet ist. Die kapillaren Hohlräume tragen dazu bei, die Flüssigkeit von der Belüftungsöffnung fern zu halten. Die maximal zulässige Flüssigkeitsmenge ist vorzugsweise auf das Füllvolumen der kapillaren Hohlräume begrenzt. Der davon freie Teil des Reservoirs kann im wesentlichen dasselbe Füllvolumen wie die kapillaren Hohlräume aufweisen.

Bevorzugt weist die Belüftungsöffnung eine scharfkantige Umrandung auf, um das Benetzen der Wandungen der Belüftungsöffnung zu vermeiden. Eine scharfkantige Umrandung verhindert das Kriechen der Flüssigkeit in die Belüftungsöffnung hinein.

Bevorzugt kann auch dieses Bauteil aus mehreren übereinandergeschichteten flachen Körpern gebildet sein. Gemäß einer vorteilhaften Ausgestaltung ist das Reservoir zumindest teilweise als Vertiefung in einer Seite eines flachen Grundkörpers ausgebildet und steht vom Boden der Vertiefung ein Zapfen vor, der an seinem freien Ende die Belüftungsöffnung aufweist, von der ein Belüftungskanal durch den Zapfen in den Grundkörper hinein und durch die Wand des Grundkörpers zu einer nach außen führenden Mündung verläuft. Bevorzugt durchquert der Belüftungskanal den Grundkörper und setzt sich auf der anderen Seite desselben bis zu einer Stirnwand mit der Mündung fort. Weiterhin bevorzugt ist ein Reservoirdeckel auf der Seite des Grundkörpers mit der Belüftungsöffnung angeordnet, der eine Vertiefung aufweist, die einen weiteren Teil des Reservoirs bildet. Bevorzugt ist dann die Belüftungsöffnung in der Trennebene des Grundkörpers und des Reservoirdeckels angeordnet, so dass maximale Abstände von den Böden der Vertiefungen im Grundkörper und im Reservoirdeckel eingehalten werden können.

Ein offener Abschnitt des Belüftungskanals auf der anderen Seite des Grundkörpers kann durch einen weiteren flachen Körper abgedeckt sein, der bei Ausbildung einer Verdrängerkammer auf dieser Seite des Grundkörpers ein Membrandeckel sein kann.

Weiterhin bevorzugt befindet sich die Mündung des Belüftungskanals in einer Stirnseite des Grundkörpers, in der auch der Dosierausgang mündet. Hierdurch kann ein freier Luftzugang zur Mündung gewährleistet werden. Außerdem ermöglicht dies eine gemeinsame Abdeckung der Mündung und des Dosierausganges.

Gemäß einer Ausgestaltung hat das mikrofluidische Speicher- und Dosierbauteil
- das Reservoir mit der Belüftungsöffnung,
- die mit dem Reservoir verbundene Verdrängerkammer mit dem Dosierausgang,
- einen Körper, der Reservoir und Verdrängerkammer umfaßt, und
- ein mit dem Körper über einen Steg verbundene Beschriftungsfähnchen.

An dem Körper kann das Bauteil lagerichtig fixiert werden, so dass ein Aktuator auf die Verdrängerkammer einwirken und damit eine Dosierung bewirken kann. Da der Körper Hauptabmessungen im Bereich von wenigen Millimetern und darunter aufweisen kann und bei Einsatz in eine Dosiervorrichtung mit einem Aktuator von außen nicht mehr oder kaum noch sichtbar ist, kann eine Beschriftung bzw. Markierung auf dem Körper von außen nicht mehr wahrgenommen werden. Das mit dem Körper über einen Steg verbundene Beschriftungsfähnchen ermöglicht eine Anordnung außerhalb der Dosiervorrichtung, die eine Identifizierung des Bauteils auch im Einsatzfall ermöglicht. Dies ist beispielsweise zweckmäßig, wenn für einen Benutzer überprüfbar sein soll, mit welcher Flüssigkeit (z.B. Reagenz oder Enzym, das Bauteil befüllt ist.

Bevorzugt sind der Körper und das Beschriftungsfähnchen plattenförmig. Gemäß einer weiteren Ausgestaltung sind der Körper und das Beschriftungsfähnchen senkrecht zueinander ausgerichtet. Das Beschriftungsfähnchen kann im Einsatz eng an einer Außenfläche einer Dosiervorrichtung anliegen. Ferner kann zwischen Beschriftungsfähnchen und Körper ein Schlitz zur Aufnahme eines Gehäuseabschnittes eines das Bauteil aufnehmenden Gerätes vorhanden sein.

Gemäß einer Ausgestaltung hat das mikrofluidische Speicher- und Dosierbauteil
- das Reservoir mit der Belüftungsöffnung,
- die mit dem Reservoir verbundenen Verdrängerkammer mit dem Dosierausgang,
- einen Körper, in dem das Reservoir und die Verdrängerkammer ausgebildet sind und der den Dosierausgang und/oder eine Mündung der Belüfiungsöffnung in einer Stirnseite aufweist, und
- eine an der Stirnseite mit dem Dosierausgang ausgebildeten Schnappkontur.

Eine Verschmutzung der Stirnseite des Bauteils mit dem Dosierausgang könnte zur Kontamination der Flüssigkeit führen. Insofern ist es vorteilhaft, die Stirnseite mit einer Verschlußkappe zu verschließen, sowohl wenn das Bauteil gelagert ist, als auch bei Einsatz des Bauteils in eine Dosiervorrichtung, wenn keine Dosierungen erfolgen. Ferner ist es kaum möglich, mit bloßem Auge zu erkennen, wohin eine Dosierung erfolgt. Insofern ist die Anwendung einer Zielhilfe hilfreich, die beispielsweise durch einen Zeigerkörper oder durch einen Lichtzeiger gebildet sein kann. Die Schnappkontur an der Stirnseite des Bauteils ermöglicht, Verschlußkappe oder Zielhilfe einfach und in korrekter Ausrichtung auf den Dosierausgang anzubringen. Zugleich kann eine Verschlußkappe eine Belüftungsöffnung abdecken, die sich in derselben Stirnseite befindet.

Gemäß einer bevorzugten Ausgestaltung ist die Schnappkontur schwalbenschwanzförmig. Einbezogen ist ein Bauteil, das mit der Verschlußkappe und/oder der Zielhilfe verbunden ist.

Die Schnappkontur kann auch für andere Zwecke eingesetzt werden, beispielsweise zum Ansetzen eines Halters oder Trägers, um das Bauteil zu halten oder zu transportieren.

Die Ausgestaltung des Eingangs und des Dosierausgangs der Verdrängerkammer ist Gegenstand einer Optimierung, die darauf abzielt, beim Erweitern der Verdrängerkammer eine maximale Flüssigkeitsmenge aus dem Reservoir aufzunehmen und einen Lufteintritt durch den Ausgang zu vermeiden. Beim Komprimieren der Verdrängerkammer soll möglichst die gesamte aufgenommene Flüssigkeitsmenge aus dem Dosierausgang abgegeben und möglichst wenig Flüssigkeit in das Reservoir zurückgedrückt werden. Bevorzugt erfolgt die Abgabe der Flüssigkeit aus dem Dosierausgang im Freistrahl. Bei sämtlichen Lösungen mit einer Verdrängerkammer kann diese gemäß einer vorteilhaften Ausgestaltung einen Eingang mit einer Drossel und/oder einen Dosierausgang mit einer Düse aufweisen.

Gemäß einer weiteren Ausgestaltung, die für sämtliche Lösungen gilt, ist das Bauteil lösbar mit einer Dosiervorrichtung verbunden, die einen auf eine Wand der Verdrängerkammer des Bauteils einwirkenden Aktuator hat, um die Wand zu verlagern und in der Verdrängerkammer enthaltene Flüssigkeit zu verdrängen. Die betreffende Wand der Verdrängerkammer ist vorzugsweise ein Membrandeckel.

Schließlich ist gemäß einer Ausgestaltungdas Bauteil lösbar mit einer Dosiervorrichtung verbunden, die einen Füllstandssensor zum Abtasten des Füllstands im Verbindungskanal aufweist.

Die Erfindung wird nachfolgend anhand der anliegenden Zeichnungen eines bevorzugten Ausführungsbeispiels näher erläutert. In den Zeichnungen zeigen:
- Fig. 1: das Speicher- und Dosierbauteil in einer perspektivischen Ansicht auf die Membranseite;
- Fig. 2: den Grundkörper desselben Bauteils in einer perspektivischen Ansicht auf die Reservoirseite;
- Fig. 3: den Reservoirdeckel desselben Bauteils in einer perspektivischen Ansicht auf die Innenseite;
- Fig. 4: den Grundkörper desselben Bauteils in einer perspektivischen Ansicht auf die Verdrängerseite;
- Fig. 5: den Membrandeckel desselben Bauteils in einer perspektivischen Ansicht auf die Innenseite;
- Fig. 6: das Reservoir und die Verdrängerkammer desselben Bauteils in grobscherna- tischer Darstellung;
- Fig. 7: Reservoir und Verdrängerkammer desselben Bauteils im Dosierbetrieb in grobschematischer Darstellung;
- Fig. 8: Reservoir und Verdrängerkammer desselben Bauteils beim Zentrifugieren in grobschematischer Darstellung;
- Fig. 9: Kapillarstruktur des Reservoirs desselben Bauteils im grobschematischem Längsschnitt;
- Fig. 10: Kapillarstruktur des Reservoirs desselben Bauteils in grobschematischem Querschnitt;
- Fig. 11: Endbereich eines Kapillarkanals in grobschematischem Längsschnitt.

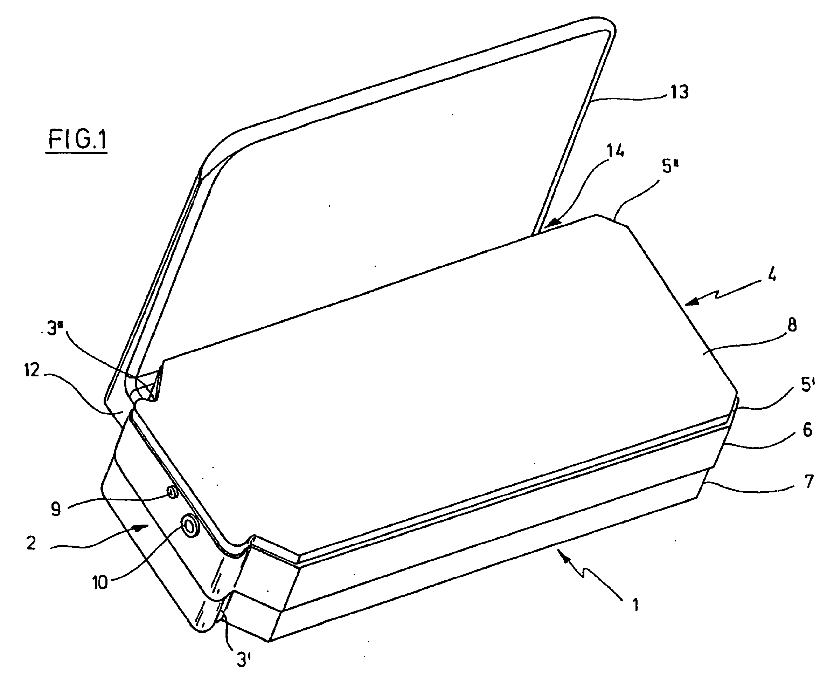

Gemäß Fig. 1 hat das mikrofluidische Speicher- und Dosierbauteil einen im wesentlichen plattenförmigen Körper 1, der angrenzend an die eine Stirnseite 2 eine - in der Draufsicht schwalbenschwanzförmige - Schnappkontur 3', 3" in den Schmalseiten hat und der an der anderen Stirnseite 4 bei 5', 5" zu den Schmalseiten hin angefast ist.

Der Körper 1 ist gebildet aus aufeinanderliegenden, plattenförmigen Körpern mit im wesentlichen komplementärer Außenkontur, nämlich aus einem Grundkörper 6, einem Reservoirdeckel 7 und einem Membrandeckel 8.

In der Stirnseite 2 hat der Körper 1, genauer gesagt der Grundkörper 6, einen Dosierausgang 9 und eine Mündung 10 eines Belüftungskanals.

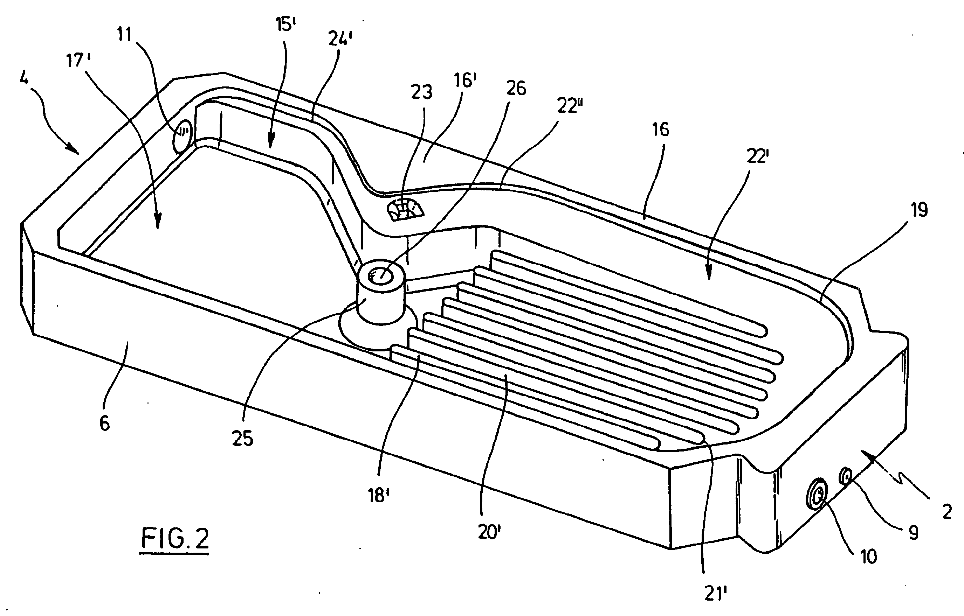

Außerdem hat der Körper 1, genauer gesagt der Grundkörper 6, in der Stirnseite 4 eine Befüllöffnung 11, die in der Fig. 2 gezeigt ist.

Angrenzend an die Schnappkontur 3" ist der Körper 1 über einen Steg 12 mit einem Beschriftungsfähnchen 13 verbunden, das plattenförmig und senkrecht zum Körper 1 ausgerichtet ist. Zwischen dem Beschriftungsfähnchen 13 und der benachbarten Schmalseite des Körpers 1 ist ein Spalt 14 ausgebildet.

Gemäß Fig. 2 hat der Grundkörper 6 in einer großflächigen Seite eine Vertiefung 15', um die Auflagefläche 16 umläuft. Vom Boden 17' der Vertiefung 15' stehen Lamellen 18' vor, die parallel und in Längsrichtung des Grundkörpers 6 gerichtet sind. Die Lamellen 18' beginnen an einer ersten Abstufung 19, die in der Vertiefung 15' neben der Stirnseite 2 mit der Dosieröffnung 9 ausgebildet ist. Die Lamellen 18' enden etwa auf halber Länge des Grundkörpers 6. Ihre Oberkante fluchtet mit der ersten Abstufung 19. Zwischen den Lamellen 18' und neben den äußeren Lamellen 18' erstrecken sich Kapillarkanäle 20'. Diese sind in Richtung der Stirnseite 2 durch Absätze 21' begrenzt und in Richtung der Stirnseite 4 offen.

An einer Schmalseite des Grundkörpers 6 erstreckt sich ausgehend von der ersten Abstufung 19 eine zweite Abstufung 22' in der Vertiefung 15', deren Oberseite (bezogen auf die Fig. 1) eine Begrenzungswand eines kapillaren Steigkanals 22 ist.

Die zweite Abstufung 22' steigt ausgehend von der ersten Abstufung 19 leicht zum Niveau der Auflagefläche 16 hin an. Der Anstieg endet an einer leicht S-förmig gekrümmten dritten Abstufung 22", der teilweise um einen nach innen vorstehenden Bereich 16' der Auflagefläche 16 herumgeführt ist und einen konstanten Abstand von der Auflagefläche 16 hat. Die dritte Abstufung 22" begrenzt ebenfalls den kapillaren Steigkanal 22. In der dritten Abstufung 22" mündet ein quer zum Grundkörper 6 gerichteter Durchgang 23.

Ausgehend von der dritten Abstufung 22" ist eine vierte Abstufung 24' bis zur Stirnseite 4 erstreckt, deren Oberseite (bezogen auf Fig. 1) eine Begrenzungswand eines Befüllkanals 24 ist. Diese Begrenzungswand des Befüllkanals 24 hat ebenfalls bezüglich der Auflagefläche 16 eine geringfügige Neigung, wobei sie am Übergang zur dritten Abstufung 22" den geringsten Abstand und an der Stirnseite 4 den größten Abstand von der Auflagefläche 16 hat.

In der Stirnseite 4 mündet direkt neben dem Befüllkanal 24 die Befüllöffnung 11 in der Vertiefung 15'.

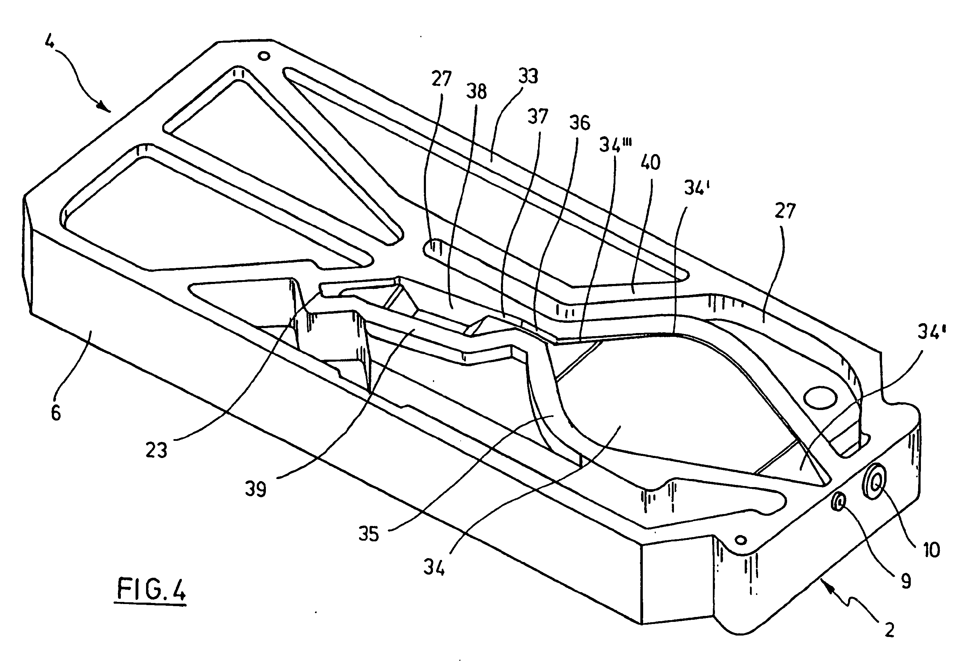

Ferner steht ungefähr im Zentrum des Grundkörpers 6 in dem von Lamellen 18' freien Bereich der Vertiefung 15' vom Boden 17' ein Zapfen 25 vor, der am äußeren Ende eine Bclüftungsöffnung 26 hat, die über einen durch den Zapfen 25 geführten und entlang der gegenüberliegenden Seite des Grundkörpers 6 offen geführten Belüftungskanal 27 (vgl. Fig. 4) mit der Mündung 10 verbunden ist.

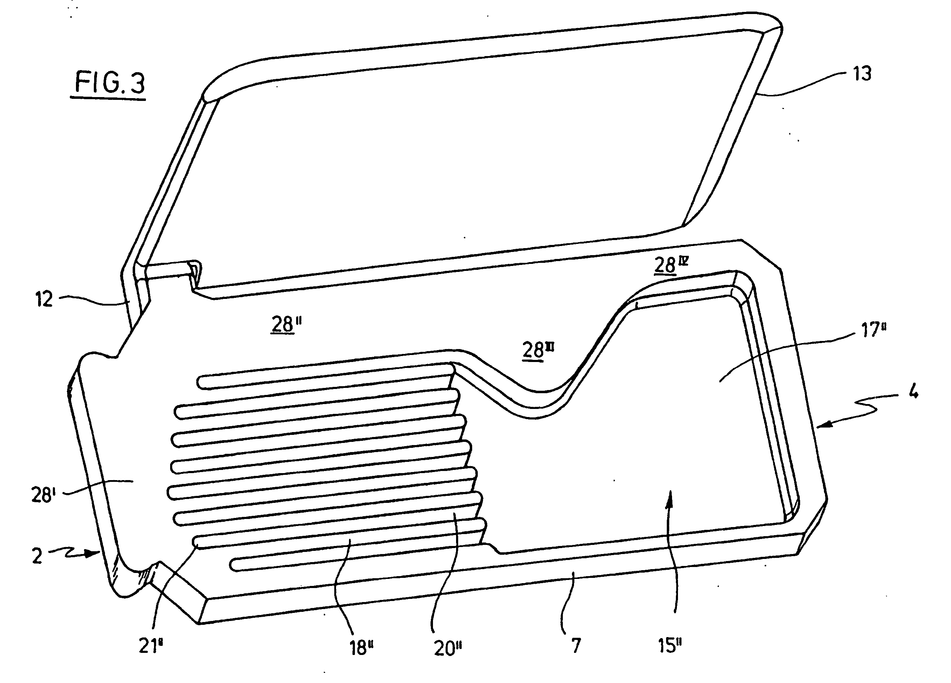

Gemäß Fig. 3 weist der Reservoirdeckel 7 ebenfalls eine Vertiefung 15" auf, die einen Boden 17" hat und von einer umlaufenden Auflagefläche 28 umgeben ist. Vom Boden 17" stehen Lamellen 18" vor, die parallel in Längsrichtung des Reservoirdeckels 7 gerichtet sind. Die Lamellen 18" gehen von einem verbreiterten Bereich 28' der Auflagefläche 28 aus, der an die Stirnseite 2 angrenzt. Sie erstrecken sich etwa bis zur Mitte der Länge des Reservoirdeckels 7. Sie enden in einem Abstand vom Boden 17" auf dem Niveau der Auflagefläche 28. Zwischen den Lamellen 18" und neben den beiden äußeren Lamellen 18" erstrecken sich Kapillarkanäle 20", die zur Stirnseite 2 durch einen Absatz 21" begrenzt und in Richtung der Stirnseite 4 offen sind.

Die Auflagefläche 28 hat an einer Schmalseite des Reservoirdeckels 7 im Bereich neben den Lamellen 18" einen verbreiterten Abschnitt 28". Daran angrenzend hat sie einen in den von Lamellen freien Bereich der Vertiefung 15" vorspringenden Bereich 28'". Daran angrenzend hat sie wiederum einen schmaleren Bereich 28^{IV}.

An dieselbe Schmalseite des Reservoirdeckels 7 ist über den Steg 12 das Beschriftungsfähnchen 13 integral angeformt.

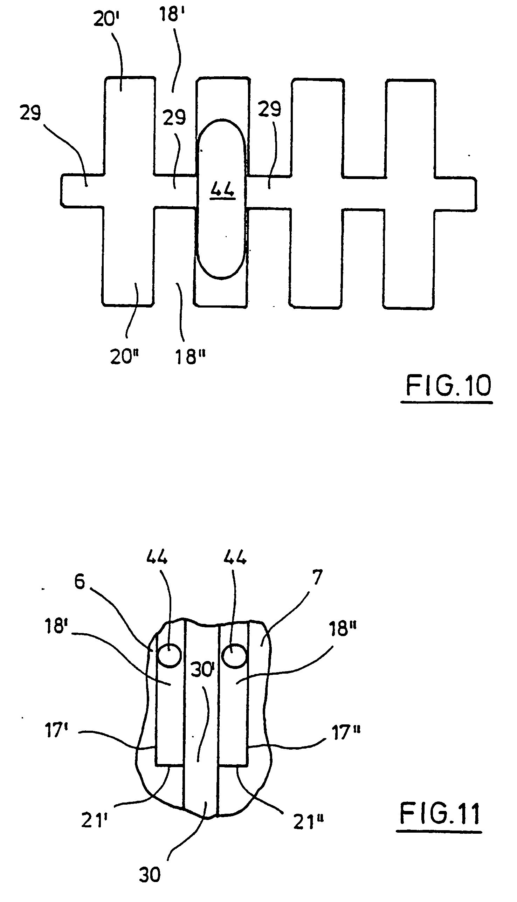

Gemäß Fig. 1 sind der Grundkörper 6 und der Reservoirdeckel 7 mit den Auflageflächen 16, 28 aufeinandergelegt und miteinander verbunden. Die Lamellen 18', 18" fluchten dann miteinander, ebenso wie die Kapillarkanäle 20', 20" dazwischen. Die Kapillarkanäle 20', 20" sind durch spaltförmige Kapillarverbindungen 29 miteinander verbunden, die im Abstandsbereich zwischen den Lamellen 18', 18" ausgebildet sind (vgl. Fig. 10).

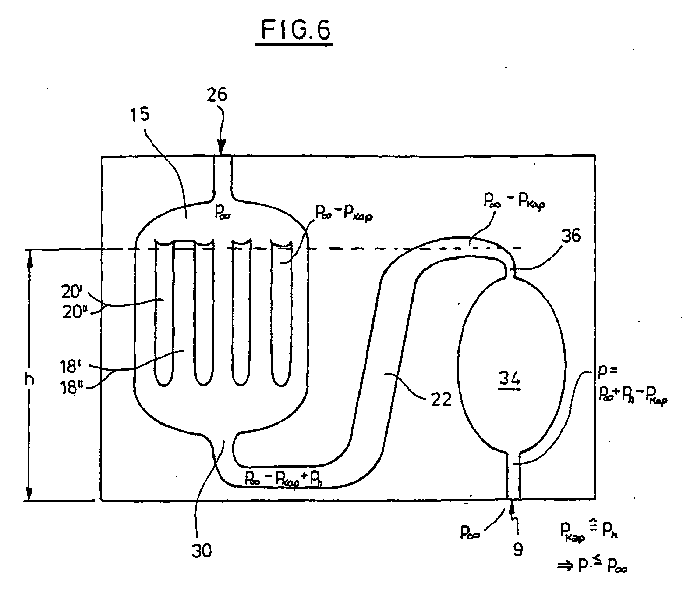

Die erste Abstufung 19 und der innen von der Auflagefläche 16 vorstehende Teil der Auflagefläche 28' begrenzen einen Ausgang 30 des die Kapillarkanäle 20', 20" und Kapillarverbindungen 29 enthaltenden, von den Vertiefungen 15', 15" gebildeten Reservoirs 15 (vgl. Fig. 6). Die Kapillarkanäle 20', 20" und Kapillarverbindungen 29 münden durch eine Austrittsöffnung 30 in den Ausgang 30, wobei die Austrittsöffnung 30 zwischen den Absätzen 21', 21" ausgebildet ist (vgl. Fig. 11).

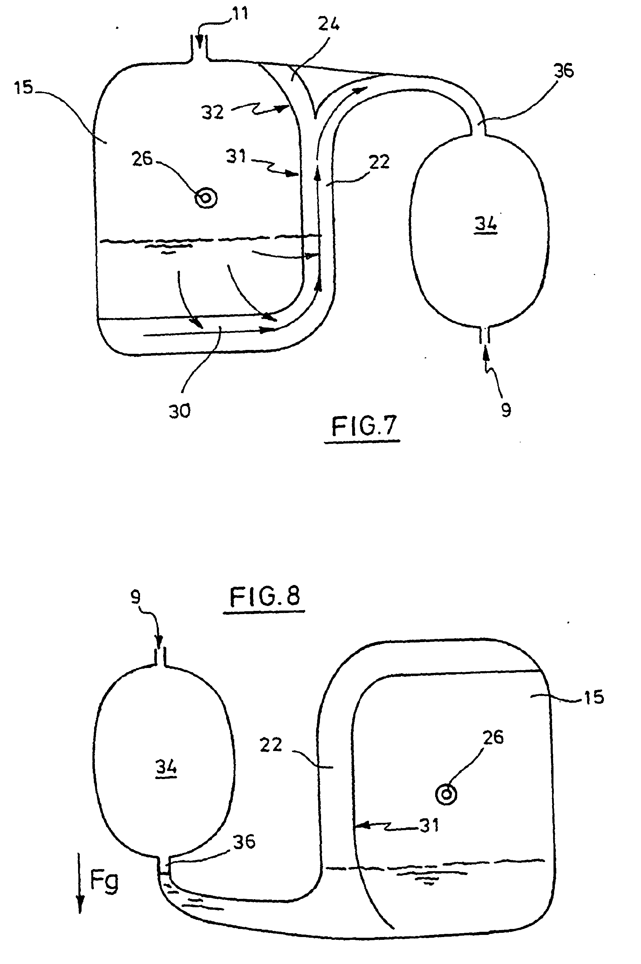

Ferner begrenzt der Teil der Auflageflächen 28", 28'" der innen von den Auflageflächen 16, 16' vorsteht, den kapillaren Steigkanal 22. Dieser ist durch einen zwischen den Auflageflächen 28", 28'" und Abstufungen 22', 22" gebildeten Spalt 31 zum Reservoir 15 hin geöffnet ist, dessen Breite allmählich zur dritten Abstufung 22" hin abnimmt. Im Bereich der dritten Abstufung 22" ist die Breite des Spaltes 31 konstant (vgl. Fig. 7).

Ferner begrenzt der über die Auflageflächen 16, 16' hinausstehende Teil der Auflageflächen 28"', 28^{IV} den Befüllkanal 24, der ebenfalls durch einen seitlichen Spalt 32 zum Reservoir 15 hin geöffnet ist (vgl. Fig.7). Die Höhe des Spaltes 32 nimmt zur Stirnwand 4 hin zu.

Gemäß Fig. 4 hat der Grundkörper 6 auf der anderen großflächigen Seite eine umlaufende Auflagefläche 33. Innerhalb dieser Auflagefläche ist eine Verdrängerkammer 34 in Form einer Vertiefung vorhanden, die von einer tropfenförmigen Wand 35 begrenzt ist, die auf demselben Niveau wie die Auflagefläche 33 endet.

Die Verdrängerkammer 34 hat einen zentralen Bereich 34' konstanter Höhe und einen bezüglich der Auflagefläche 33 stark abfallenden Bodenbereich 34", der am tiefsten Punkt mit dem Dosierausgang 9 verbunden ist. Auf der anderen Seite hat die Verdrängerkammer 34 einen ebenfalls stark abfallenden Bodenbereich 34"', deren tiefster Punkt mit einem Eingang 36 der Verdrängerkammer 34 verbunden ist, der als Drossel ausgebildet ist.

Der Durchgang 23 mündet auf dieser Seite des Grundkörpers 6 in einen Verbindungskanal 37, der anderenends mit dem Eingang 36 verbunden ist und im Zentralbereich eine prismenförmige Vertiefung 38 aufweist.

Der Verbindungskanal 37 ist ebenfalls von einer hochstehenden Wand 39 eingefaßt, die auf dem Niveau der Auflagefläche 33 endet.

Auch der offene Abschnitt des Belüftungskanals 27 ist von einer Wand 40 umgeben, die auf dem Niveau der Auflagefläche 33 endet. Teilweise fällt die Wand 40 mit den Wänden 35, 39 zusammen.

Ferner hat der Grundkörper 6 auf derselben Seite weitere Vertiefungen, die eine Vergleichmäßigung der Wandstärken herbeiführen sollen.

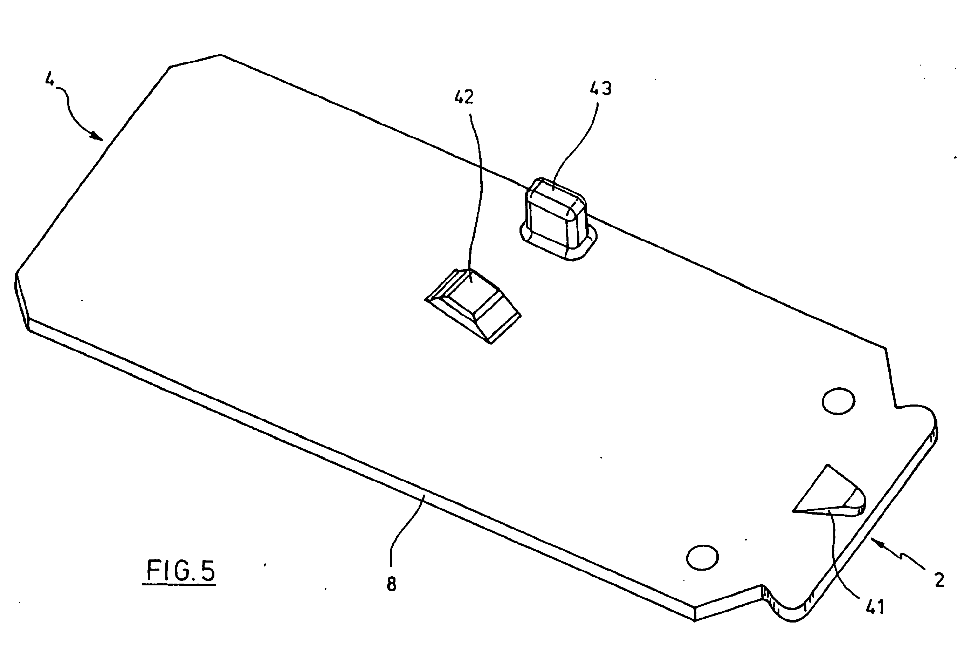

Gemäß Fig. 5 hat der Membrandeckel 8 eine im wesentlichen plane Innenseite. Nahe der Stirnseite 2 weist er eine rampenförmige Erhöhung 41 auf. Etwa im Zentrum hat er in einem durchsichtigen Bereich eine prismenförmige Erhöhung 42. Daneben weist er nahe der Längsseite einen Anspritzzapfen 43 auf.

Der Membrandeckel 8 wird auf die Auflageflächen 33, 35, 39, 40 des Grundkörpers 6 gelegt und mit diesen verbunden. Die rampenförmige Erhöhung 41 greift dabei als Verdränger in den vorderen Endbereich der Verdrängerkammer 34 ein und bildet zugleich einen vorderen Anschlag zur Positionierung des Membrandeckels 8 auf dem Grundkörper 6.

Die prismenförmige Erhöhung 42 greift in die prismenförmige Vertiefung 38 ein und der Anspritzzapfen 43 in eine benachbarte Vertiefung des Grundkörpers 6.

Der Membrandeckel 8 bildet damit zugleich eine membranförmige Abdeckung der Verdrängerkammer 34. Außerdem deckt er den Verbindungskanal 37 und den Belüftungskanal 27 ab.

Grundkörper 6, Reservoirdeckel 7 und Membrandeckel 8 sind durch Spritzgießen aus Kunststoff hergestellt. Bei dem Kunststoff kann es sich insbesondere um Polycarbonat handeln. Für den Grundkörper 6 wird geschwärztes Polycarbonat verwendet und für den Reservoirdeckel 7 und den Membrandeckel 8 zumindest teilweise transparentes Polycarbonat. Dies ermöglicht ein Verbinden von Grundkörper 6, Reservoirdeckel 7 und Membrandeckel 8 durch Laserschweißen. Hierbei durchdringt ein Laserstrahl das transparente Fügeteil und wird vom opaken Fügeteil absorbiert, so dass es dort zu einer starken lokalen Erwärmung und damit zu einer Verschweißung der Fügeteile kommt. Die Verbindung der Fügeteile kann aber insbesondere auch durch Kleben erfolgen.

Für eine möglichst genaue Mengendosierung sowie Formung und Ausrichtung des Flüssigkeitstropfens oder Strahls ist ein maßhaltiger Dosierausgang wichtig. Eine besondere Maßhaltigkeit ist durch Bohren des Dosierausganges oder durch Laserstrukturieren (Abbilden eines intensiven Laserstrahls durch eine Maske auf das Werkstück) erreichbar.

Der Körper 1 hat bei einem ausgeführten Muster folgende Abmessungen:
Länge = 23,5 mm, Breite = 10 mm, Höhe = 4,9 mm.

Das Beschriftungsfähnchen 13 hat bei dem Muster folgende Abmessungen:
Länge = 19,5 mm, Breite = 14,8 mm, Höhe = ca. 1 mm.

Das Speicher- und Dosierbauteil funktioniert wie folgt:

Durch die Befüllöffnung 11 wird die zu dosierende Flüssigkeit eingegeben. Insbesondere bei Ausführung des Bauteils als Disposable, d.h. als Verbrauchsteil, kann dies beim Hersteller geschehen. Es ist aber auch eine wiederverwendbare Ausführung des Bauteils möglich, bei dem das Befüllen insbesondere beim Benutzer oder ein Wiederbefüllen beim Hersteller erfolgen kann.

Beim Befüllen wird das Bauteil vorzugsweise so ausgerichtet, dass die Flüssigkeit durch den seitlichen Spalt 32 zunächst in den Befüllkanal 24 läuft und durch diesen den Steigkanal 22, die Kapillarkanäle 20', 20" und die Kapillarverbindungen auffüllt. Hierdurch wird die Luft allmählich aus dem System verdrängt und ein blasenfreies Befüllen sichergestellt. Das Reservoir 15 wird maximal bis zum oberen Rand der Lamellen 18', 18" befüllt. Außerdem wird über den Durchgang 23 und den Verbindungskanal 37 die Verdrängerkammer 34 blasenfrei vorbefüllt.

Anschließend wird die Befüllöffnung 11 verschlossen, beispielsweise durch dauerhaftes Einpressen einer Glaskugel oder durch! Einsetzen eines entnehmbaren Stopfens.

Unabhängig von der Lage des Bauteils läuft die Flüssigkeit selbsttätig nicht aus, da der hydrostatische Druck im Dosierausgang 9 sehr gering ist und die Kapillarkräfte ausreichen, die Flüssigkeit im System zurückzuhalten. Dies ist durch die Fig. 6 veranschaulicht:

Der Ausgang 30 unten am Reservoir 15 ist mit dem Eingang 36 oben an der Verdrängerkammer 34 über den kapillaren Steigkanal 22 verbunden. Reservoir 15 und Verdrängerkammer 34 befinden sich etwa auf demselben Niveau.

Im belüfteten Reservoir 15 herrscht oberhalb der Lamellen 18', 18" Umgebungsdruck p_{∞}.

Im Ausgang 30 des Reservoirs 15 ist der Druck in der Flüssigkeit gegenüber dem Umgebungsdruck um den Kapillardruck p_{Kap} reduziert und um den hydrostatischen Druck pₕ aufgrund der Höhe der Flüssigkeitssäule zwischen den Lamellen 18', 18"erhöht.

Etwa derselbe Druck liegt im Dosierausgang 9 vor, der sich etwa auf dem Niveau des Ausgangs 30 des Reservoirs 15 befindet.

Von außen liegt am Dosierausgang 9 Umgebungsdruck p_{∞} an. Flüssigkeit strömt demnach selbsttätig aus dem Dosierausgang nicht aus, wenn der Kapillardruck p_{Kap} mindestens so hoch wie der hydrostatische Druck pₕ ist. Da der hydrostatische Druck pₕ durch die Anordnung von Reservoir 15 und Verdrängerkammer 34 auf demselben Niveau gering ist, reicht ein verhältnismäßig geringer Kapillardruck p_{Kap} aus, die Flüssigkeit im System zu halten.

Für das Dosieren von Flüssigkeit wird das Bauteil in eine Dosiervorrichtung eingesetzt, so dass der Membrandeckel 8 mit dem die Verdrängerkammer 34 überdeckenden Bereich (vorzugsweise unter Vorspannung) an einem Aktor (z.B. einem Piezoaktor) der Dosiervorrichtung anliegt und eine Lichtschranke zur Blasendetektion der Dosiervorrichtung von außen auf das Prisma 42 des Membrandeckels 8 gerichtet ist. Dabei ist das Bauteil durch Einklemmen oder Einschnappen in der Dosiervorrichtung lösbar gehalten. Das Beschriftungsfeld 13 liegt außen an einer in den Spalt 14 eingreifenden Gehäusewand der Dosiervorrichtung an, so dass die Beschriftung von außen lesbar ist. Bei der Dosiervorrichtung kann es sich insbesondere um eine Handgerät handeln.

Zum Dosieren wird der Aktor betätigt, so dass der Membrandeckel 8 partiell in die Verdrängerkammer 34 gedrückt wird und eine definiert Flüssigkeitsmenge im Freistrahl aus der Dosieröffnung austritt. Die Drossel im Eingang 36 der Verdrängerkammer 34 und der Dosierausgang 9 sind so aufeinander abgestimmt, dass dabei nur eine verhältnismäßig geringe Flüssigkeitsmenge in das Reservoir 15 zurückgedrängt wird und der größte Teil der verdrängten Flüssigkeit aus dem Dosierausgang 9 austritt. Nach Entlastung durch den Aktor kehrt der Membrandeckel 8 aufgrund seiner Elastizität in seine Ausgangslage zurück. Durch den Unterdruck in der Verdrängerkammer 34 und die Kapillarität des Steigkanals 22 wird Flüssigkeit aus dem Reservoir 15 in die Verdrängerkammer 34 nachgefördert. Ein Einsaugen von Luft durch den Dosierausgang 9 wird durch den Kapillardruck der Flüssigkeit im Dosierausgang 9 verhindert.

Beim Dosieren strömt die Flüssigkeit durch den Ausgang 30 des Reservoirs 15 und den Steigkanal 22 nach. Der Kapillardruck der Flüssigkeit in den seitlichen Spalt 31, 32 des Steigkanals 22 und des Befüllkanals 24 verhindert, dass aus dem Reservoir 15 Luft in den Steigkanal 22 eingesogen wird. Dies ist in der Fig. 7 gezeigt.

Falls dennoch Blasen im System auftreten, können diese durch Zentrifugieren entfernt werden. Die Ausrichtung des Bauteils im Zentrifugalfeld F_{g} ist in der Fig. 8 dargestellt. Die Flüssigkeit aus der Verdrängerkammer 34, dem Verbindungskanal 37, dem Durchgang 23 und dem Steigkanal 22 wird durch den seitlichen Spalt 31 des Steigkanals 22 im Oberbereich des Reservoirs 15 angesammelt. Ebenso die Flüssigkeit aus dem Kapillarbereich des Reservoirs 15. Anschließend ist in der am Anfang der Funktionsbeschreibung angegebenen Weise eine blasenfreie Neubefüllung des Systems möglich.

Zudem veranschaulichen die Fig. 7 und 8, dass die Flüssigkeit nicht in die Belüftungsöffnung 26 eintreten kann, gleich ob sie vollständig in den kapillaren Hohlräumen 20', 20", 29 oder in dem davon freien Bereich des Reservoirs 15 enthalten ist.

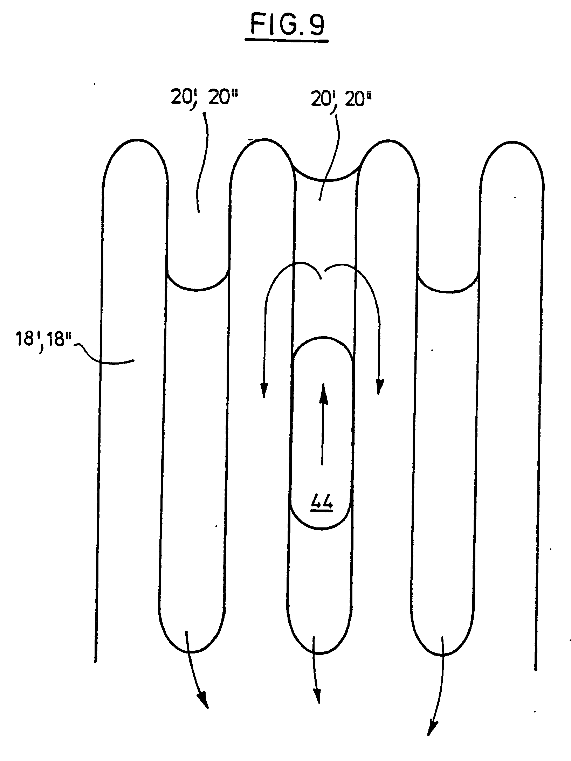

Zudem wirkt die Ausgestaltung der kapillaren Hohlräume 20', 20", 29 des Reservoirs 15 störenden Blasen entgegen. Gemäß Fig. 9 und 10 ist die Entstehung von Blasen 44, beispielsweise aufgrund starker Erschütterungen, im wesentlichen auf die Kapillarkanäle 20', 20" beschränkt. In den Kapillarkanälen 20', 20" findet durch Aufstieg der Blasen 44 zwischen den Lamellen 18', 18" eine selbsttätige Entgasung statt. Flüssigkeit kann dabei in die Kapillarverbindungen 29 ausweichen und die von den Blasen 44 besetzten Volumina auffüllen. Eine ununterbrochene Versorgung des Ausgangs 30 mit Flüssigkeit ist durch die Kapillarverbindungen 29 sichergestellt.

Zudem werden gemäß Fig. 11 durch die nur einen Teil des Querschnitts der Kapillarkanäle 20', 20" einnehmenden Austrittsöffnungen 30' und die Tendenz der Blasen 44 zur Wandanlagerung, Blasen 44 von einem Eintritt in den Ausgang 30 des Reservoirs 15 abgehalten.

Nach Gebrauch kann das Bauteil aus der Dosiervorrichtung entfernt und weggeworfen oder wieder aufgefüllt werden.

## Patentansprüche

1. Mikrofluidisches Speicher- und Dosierbauteil mit
- einem Reservoir (15) mit einer Belüftungsöffnung (26) und einem unten angeordneten Ausgang (30) für Flüssigkeit,
- kapillaren Hohlräumen (20', 20") im Reservoir (15),
- einer zumindest teilweise auf demselben Niveau wie das Reservoir (15) angeordneten Verdrängerkammer (34) mit einem oben angeordneten Eingang (36) und einem unten angeordneten Dosierausgang (9) für Flüssigkeit und
- einem den Ausgang (30) des Reservoirs (15) mit dem Eingang (36) der Verdrängerkammer (34) verbindenden kapillaren Steigkanal (22).

2. Bauteil nach Anspruch 1, bei dem das Reservoir (15) und die Verdrängerkammer (34) im wesentlichen auf demselben Niveau angeordnet sind.

3. Bauteil nach Anspruch 1 oder 2, bei dem die kapillaren Hohlräume (20', 20") zum Ausgang (30) des Reservoirs (15) führende Kapillarkanäle sind.

4. Bauteil nach einem der Ansprüche 1 bis 3, bei dem der Steigkanal (22) über einen Verbindungskanal (37), dem ein Füllstandssensor zugeordnet ist, mit dem Eingang (36) der Verdrängerkammer (34) verbunden ist.

5. Bauteil nach Anspruch 4, bei dem der Verbindungskanal (37) zwischen dem höchsten Niveau des Steigkanals (22) und dem Eingang (36) der Verdrängerkammer (34) angeordnet ist.

6. Bauteil nach einem der Ansprüche 1 bis 5, bei dem der kapillare Steigkanal (22) seitlich über einen kapillaren Spalt (31) mit dem Reservoir (15) verbunden ist, wobei der kapillare Spalt (31) so ausgelegt ist, dass im Dosierbetrieb Flüssigkeit im wesentlichen vom Ausgang (30) des Reservoirs (15) durch den kapillaren Steigkanal (22) in die Verdrängerkammer (34) strömt und dass bei Anordnung des Bauteils in einem entgegen der Strömungsrichtung im Steigkanal (22) bei Dosierbetrieb gerichteten Zentrifugalfeld Flüssigkeit aus der Verdrängerkammer (34) und dem Steigkanal (22) durch den Spalt (31) in das Reservoir (15) strömt.

7. Bauteil nach Anspruch 6, bei dem der kapillare Spalt (31) zumindest teilweise in einem Bereich des Reservoirs (15) oberhalb der kapillaren Hohlräume (20', 20") mündet.

8. Bauteil nach Anspruch 6 oder 7, bei dem sich die Kapillarität des Spaltes (31) von unten nach oben vermindert.

9. Bauteil nach einem der Ansprüche 1 bis 8, das oben eine mit dem Reservoir (15) verbundene Befüllöffnung (11) aufweist.

10. Bauteil nach Anspruch 9, bei dem ein Befüllkanal (24) zwischen der Befüllöffnung (11) und dem Steigkanal (22) angeordnet ist.

11. Bauteil nach einem der Ansprüche 1 bis 10, bei dem das Reservoir (15) und die Verdrängerkammer (34) im wesentlichen in parallelen Schichten mindestens eines flachen Körpers (1) angeordnet sind.

12. Bauteil nach Anspruch 11, bei dem der Steigkanal (22) und/oder der Befüllkanal (24) im wesentlichen in derselben Schicht wie das Reservoir (15) und/oder der Verbindungskanal (37) im wesentlichen in derselben Schicht wie die Verdrängerkammer (34) angeordnet ist/sind.

13. Bauteil nach Anspruch 11 oder 12, bei dem der Steigkanal (22) und der Verbindungskanal (37) oder der Eingang (36) der Verdrängerkammer (34) über einen quergerichteten Durchgang (23) des mindestens einen flachen Körpers (1) miteinander verbunden sind.

14. Bauteil nach einem der Ansprüche 11 bis 13, bei dem der Dosierausgang (9) in der einen Stirnseite (2) und/oder die Befüllöffnung (11) in der anderen Stirnseite (4) des mindestens einen flachen Körpers (1) angeordnet ist.

15. Bauteil nach einem der Ansprüche 11 bis 14, bei dem das Reservoir (15) und/oder der Steigkanal (22) und/oder den Befüllkanal (24) auf der einen großflächigen Seite eines flachen Grundkörpers (6), die Verdrängerkammer (34) und/oder der Verbindungskanal (37) auf der anderen großflächigen Seite des flachen Grundkörpers (6), der quergerichtete Durchgang (23) in Querrichtung im flachen Grundkörper (6), der Dosierausgang (9) in der einen Stirnseite (2) und/oder die Befüllöffnung (11) in der anderen Stirnseite (4) des flachen Grundkörpers (6) angeordnet sind und der Grundkörper (6) auf der Seite des Reservoirs (15) von einem Reservoirdeckel (7) und auf der Seite der Verdrängerkammer (34) von einem Membrandeckel (8) geschlossen ist.

16. Bauteil nach Anspruch 15, bei dem der Reservoirdeckel (7) teilweise das Reservoir (15) und/oder den Steigkanal (22) und/oder den Befüllkanal (24) und/oder der Membrandeckel (8) teilweise die Verdrängerkammer (34) und/oder den Verbindungskanal (37) enthält/enthalten.

17. Mikrofluidisches Speicher- und Dosierbauteil nach einem der vorstehenden Ansprüche mit
- dem Reservoir (15) mit der Belüftungsöffnung (26) und dem Ausgang (30) für Flüssigkeit und
- in dem Reservoir (15) angeordneten, zum Ausgang (30) des Reservoirs (15) führenden, parallelen Kapillarkanälen (20', 20") und quer zu den Kapillarkanälen gerichteten, benachbarte Kapillarkanäle miteinander verbindenden und mit dem Ausgang (30) verbundenen Kapillarverbindungen (29), deren Kapillarität die der Kapillarkanäle (20', 20") übersteigt.

18. Bauteil nach Anspruch 17, bei dem der Ausgang (30) des Reservoirs (15) eine Verbindung (22) mit einem Eingang (36) einer Verdrängerkammer (34) mit einem Dosierausgang (9) für Flüssigkeit aufweist.

19. Bauteil nach Anspruch 17 oder 18, bei dem die Kapillarkanäle (20', 20") durch parallele Lamellen (18', 18") und die Kapillarverbindungen (29) durch quergerichtete Verbindungsspalte zwischen den Lamellen (18', 18") gebildet sind.

20. Bauteil nach Anspruch 19, das einen flachen Grundkörper (6) aufweist, der auf einer Seite von dem Boden (17') einer einen Teil des Reservoirs (15) bildenden Vertiefung (15') vorstehende Lamellen (18') aufweist und einen auf dieser Seite des Grundkörpers (6) angeordneten Reservoirdeckel (7) aufweist, der von dem Boden (17") einer einen zweiten Teil des Reservoirs (15) bildenden Vertiefung (15") vorstehende Lamellen (18") aufweist, wobei die Lamellen (18') des Grundkörpers (6) und die Lamellen (18") des Reservoirdeckels (7) miteinander fluchten und zwischen den Lamellen (18') des Grundkörpers (6) und den Lamellen (18") des Reservoirdeckels (7) die Kapillarverbindungen (29) vorhanden sind.

21. Bauteil nach Anspruch 20, bei dem die Kapillarverbindungen (29) in der Trennebene zwischen dem Grundkörper (6) und dem Reservoirdeckel (7) angeordnet sind.

22. Mikrofluidisches Speicher- und Dosierbauteil nach einem der vorstehenden Ansprüche, mit
- dem Reservoir (15) mit der Belüftungsöffnung (26) und dem Ausgang (30) für Flüssigkeit,
- in dem Reservoir (15) angeordneten, zum Ausgang führenden Kapillarkanälen (20', 20") und
- Absätzen (21', 21") an den Enden der kapillarkanäle (20', 20"), in denen Austrittsöffnungen (30') des Ausgangs (30) für Flüssigkeit angeordnet sind, die einen geringeren Querschnitt als die Kapillarkanäle (20', 20") haben.

23. Bauteil nach Anspruch 22, bei dem der Ausgang (30) eine Verbindung (22) mit einem Eingang (36) einer Verdrängerkammer (34) mit einem Dosierausgang (9) für Flüssigkeit aufweist.

24. Bauteil nach Anspruch 22 oder 23, bei dem die Kapillarkanäle (20', 20") parallel und/oder geradlinig sind.

25. Bauteil nach einem der Ansprüche 22 bis 24, bei dem die Austrittsöffnungen (30') zentral auf die Kapillarkanäle (20', 20") ausgerichtet sind.

26. Bauteil nach einem der Ansprüche 22 bis 25, bei dem ein flacher Grundkörper (6) auf einer Seite einen Teil des Reservoirs (15) und ein auf dieser Seite angeordneter Reservoirdeckel (7) einen weiteren Teil des Reservoirs (15) aufweist und die Absätze (21', 21") einen Teil auf dem Grundkörper (6) und einen weiteren Teil auf dem Reservoirdeckel (7) aufweisen.

27. Mikrofluidisches Speicher- und Dosierbauteil nach einem der vorstehenden Ansprüche mit
- dem Reservoir (15), das die Belüftungsöffnung (26) und den Ausgang (30) für Flüssigkeit aufweist,
- bei dem die Belüftungsöffnung (26) an einem zentralen Ort im Reservoir (15) in einem Abstand von Begrenzungswänden des Reservoirs angeordnet ist, so dass bei beliebiger Ausrichtung des mit einer maximal zulässigen Flüssigkeitsmenge gefüllten Reservoirs (15) keine Flüssigkeit durch die Belüftungsöffnung (26) nach außen austritt.

28. Bauteil nach Anspruch 27, bei dem der Ausgang (30) des Reservoirs (15) eine Verbindung (22) mit dem Eingang (36) einer Verdrängerkammer (34) mit einem Dosierausgang (9) für Flüssigkeit aufweist.

29. Bauteil nach Anspruch 27 oder 28, bei dem das Reservoir (15) einen Teil mit kapillaren Hohlräumen (20', 20") und einen von kapillaren Hohlräumen freien Teil aufweist, in dem die Belüftungsöffnung (26) angeordnet ist.

30. Bauteil nach einem der Ansprüche 27 bis 29, bei dem der Teil des Reservoirs (15), der von kapillaren Hohlräumen (20', 20") frei ist, etwa dasselbe Flüssigkeitsvolumen aufnehmen kann; wie der Teil des Reservoirs (15), in dem sich die kapillaren Hohlräume befinden.

31. Bauteil nach einem der Ansprüche 27 bis 30, bei dem die Belüftungsöffnung (26) eine scharfkantige Umrandung aufweist. :

32. Bauteil nach einem der Ansprüche 27 bis 31, bei dem das Reservoir (15) zumindest teilweise als Vertiefung (15') in einer Seite eines flachen Grundkörpers (6) ausgebildet ist und vom Boden (17') der Vertiefung ein Zapfen (25) vorsteht, der an seinem freien Ende die Belüftungsöffnung (26) aufweist, von der ein Belüftungskanal (27) durch den Zapfen (25) in den Grundkörper (6) hinein und durch die Wand des Grundkörpers (6) zu einer nach außen führenden Mündung (10) verläuft.

33. Bauteil nach Ansprüche 32, bei dem ein Reservoirdeckel (7) auf der Seite des Grundkörpers (6) mit der Belüftungsöffnung (26) angeordnet ist und eine einen weiteren Teil des Reservoirs (15) bildende Vertiefung (15") aufweist.

34. Bauteil nach Anspruch 32 oder 33, bei dem die Belüftungsöffnung (26) in der Trennebene des Grundkörpers (6) und des Reservoirdeckels (7) angeordnet ist.

35. Bauteil nach einem der Ansprüche 32 bis 34, bei dem der Belüftungskanal (27) den Grundkörper (6) durchquert und auf der anderen Seite des Grundkörpers einen offenen Abschnitt hat.

36. Bauteil nach einem der Ansprüche 32 bis 35, bei dem der Belüftungskanal (27) die Mündung (10) in einer Stirnseite (2) des Grundkörpers (6) hat, in der auch der Dosierausgang (9) mündet.

37. Mikrofluidisches Speicher und Dosierbauteil nach einem der vorstehenden Ansprüche mit
- dem Reservoir (15) mit der Belüftungsöffnung (26),
- der mit dem Reservoir (15) verbundenen Verdrängerkammer (34) mit dem Dosierausgang (9),
- einem Körper (1), der Reservoir (15) und Verdrängerkammer (34) umfaßt, und
- einem mit dem Körper (1) über einen Steg (12) verbundenen Beschriftungsfähnchen (13).

38. Bauteil nach Anspruch 37, bei dem der Körper (1) und das Beschriftungsfähnchen (13) plattenförmig sind.

39. Bauteil nach Anspruch 37 oder 38, bei dem der Körper (1) und das Beschriftungsfähnchen (13) senkrecht zueinander ausgerichtet sind.

40. Bauteil nach einem der Ansprüche 37 bis 39, bei dem zwischen Beschriftungsfähnchen (13) und Körper (1) ein Schlitz (14) zur Aufnahme eines Gehäuseabschnittes eines das Bauteil aufnehmenden Gerätes vorhanden ist.

41. Mikrofluidisches Speicher- und Dosierbauteil nach einem der vorstehenden Ansprüche, mit
- dem Reservoir (15) mit der Belüftungsöffnung (26),
- der mit dem Reservoir (15) verbundenen Verdrängerkammer (34) mit dem Dosierausgang (9),
- einem Körper (1), in dem das Reservoir (15) und die Verdrängerkammer (34) ausgebildet sind und der den Dosierausgang (9) und/oder eine Mündung (10) der Belüftungsöffnung (26) in einer Stirnseite (2) aufweist, und
- einer an der Stirnseite (2) mit dem Dosierausgang ausgebildeten Schnappkontur (3', 3").

42. Bauteil nach Anspruch 41, bei dem die Schnappkontur (3', 3") schwalbenschwanzförmig ist.

43. Bauteil nach Anspruch 41 oder 42, bei dem die Schnappkontur (3', 3") lösbar mit einer Verschlußkappe zum Verschließen der Dosieröffnung (9) und/oder der Mündung (10) oder mit einer Zielhilfe zum Ausrichten des Dosierausganges (9) auf ein Objekt verbunden ist.

44. Bauteil nach einem der Ansprüche 1 bis 43, bei dem der Eingang (36) der Verdrängerkammer (34) eine Drossel aufweist und/oder der Dosierausgang (9) eine Düse aufweist.

45. Bauteil nach einem der Ansprüche 1 bis 44, das lösbar mit einer Dosiervorrichtung verbunden ist, die einen auf eine Wand (8) der Verdrängerkammer (34) des Bauteils einwirkenden Aktuator hat, um die Wand zu verlagern und in der Verdrängerkammer (34) enthaltene Flüssigkeit zu verdrängen.

46. Bauteil nach einem der Ansprüche 1 bis 45, das lösbar mit einer Dosiervorrichtung verbunden ist, die einen Füllstandssensor zum Abtasten des Füllstands im Verbindungskanal (37) aufweist.

## Claims

1. A microfluidic accumulating and proportioning component, comprising:
- a reservoir (15) including a ventilation hole (26) and an outlet (30) disposed below for liquid,
- capillary cavities (20', 20") in the reservoir (15),
- a displacement chamber (34) which is disposed at least partly at the same level as the reservoir (15), with an inlet (36) disposed above and a proportioning outlet (9) disposed below for a liquid, and
- a capillary riser channel (22) connecting the outlet (30) of the reservoir (15) to the inlet (36) of the displacement chamber (34).

2. Component according to claim 1 wherein the reservoir (15) and the displacement chamber (34) are disposed substantially at the same level.

3. Component according to claim 1 or 2 wherein the capillary cavities (20', 20") are capillary channels leading to the outlet (30) of the reservoir (15).

4. Component according to any one of claims 1 to 3 wherein the riser channel (22) is connected to the inlet (36) of the displacement chamber (34) via a connection duct (37) with which a filling level sensor is associated.

5. Component according to claim 4 wherein the connection duct (37) is disposed between the highest level of the riser channel (22) and the inlet (36) of the displacement chamber (34).

6. Component as claimed in any one of claims 1 to 5 wherein the capillary riser channel (22) is laterally connected to the reservoir (15) via a capillary gap (31) with the capillary gap (31) being designed so as to cause a liquid to flow substantially from the outlet (30) of the reservoir (15) into the displacement chamber (34) through the capillary riser channel (22) in the proportioning mode and, if the component is disposed in a centrifugal field directed counter to the direction of flow in the riser channel (22) in the proportioning mode, to cause a liquid to flow from the displacement chamber (34) and the riser channel (22) into the reservoir (15) through the gap (31).

7. Component according to claim 6 wherein the capillary gap (31) leads to at least partly into a region of the reservoir (15) above the capillary cavities (20', 20").

8. Component according to claim 6 or 7 wherein the capillarity of the gap (31) is reduced from bottom to top.

9. Component according to any one of claims 1 to 8 which has a filling opening (11) at top that is connected to the reservoir (15).

10. Component according to claim 9 wherein a filling channel (24) is disposed between the filling opening (11) and the riser channel (22).

11. Component according to any one of claims 1 to 10 wherein the reservoir (15) and the displacement chamber (34) are substantially disposed in parallel layers of at least one planar body (1).

12. Component according to claim 11 wherein the riser channel (22) and/or the filling channel (24) are substantially disposed in the same layer as the reservoir (15) and/or the connection duct (37) is/are substantially disposed in the same layer as the displacement chamber (34).

13. Component according to claim 11 or 12 wherein the riser channel (22) and the connection duct (37) or the inlet (36) of the displacement chamber (34) are connected to each other via a transversely directed passage (23) of the at least one planar body (1).

14. Component according to any one of claims 11 to 13 wherein the proportioning outlet (9) is disposed in one face side (2) and/or the filling opening (11) is disposed in the other face side (4) of the at least one planar body (1).

15. Component according to any one of claims 11 to 14 wherein the reservoir (15) and/or the riser channel (22) and/or the filling channel (24) are disposed on the one large-surface side of a planar basic body (6), the displacement chamber (34) and/or the connection duct (37) are disposed on the other large-surface side of the planar basic body (6), the transversely directed passage (23) is disposed in the planar basic body (6) in a transverse direction, the proportioning outlet (9) is disposed in one face side (2) and/or the filling opening (11) is disposed in the other face side (4) of the planar basic body (6) and the planar basic body (6) is closed by a reservoir lid (7) on the side of the reservoir (15) and by a membrane lid (8) on the side of the displacement chamber (34).

16. Component according to claim 15 wherein the reservoir lid (7) partly contains the reservoir (15) and/or the riser channel (22) and/or the filling channel (24) and/or the membrane lid (8) partly contains/contain the displacement chamber and/or the connection duct (37).

17. A microfluidic accumulating and proportioning component, according toany one of the preceding claims, comprising:
- the reservoir (15) including the ventilation hole (26) and the outlet (30) for liquid,
- parallel capillary channels (20', 20") disposed in the reservoir (15) and leading to the outlet (30) of the reservoir (15) and capillary connections (29) directed transversely to the capillary channels and interconnecting adjacent capillary channels and connected to the outlet (30) the capillarity of which exceeds that of the capillary channels (20', 20").

18. Component according to claim 17 wherein the outlet (30) of the reservoir (15) has a connection (22) to an inlet (36) of a displacement chamber (34) having a proportioning outlet (9) for liquid.

19. Component according to claim 17 or 18 wherein the capillary channels (20', 20") are defined by parallel lamellae (18', 18") and the capillary connections (29) are defined by transversely directed linking gaps between the lamellae (18', 18").

20. Component according to claim 19 which has a planar basic body (6) which has lamellae (18') protruding on one side from the bottom (17') of an indentation (15') defining one part of the reservoir (15) and has a reservoir lid (7) disposed on this side of the basic body (6) wherein the reservoir lid (7) has lamellae (18") protruding from the bottom (17") of an indentation (15") defining a second part of the reservoir (15) wherein the lamellae (18') of the basic body (6) and the lamellae (18") of the reservoir lid (7) align with each other and the capillary connections (29) are located between the lamellae (18') of the basic body (6) and the lamellac (18") of the reservoir lid (7).

21. Component according to claim 20 wherein the capillary connections (29) are disposed in the separation plane between the basic body (6) and the reservoir lid (7).

22. A microfluidic accumulating and proportioning component, according to any one of the preceding claims, comprising:
- the reservoir (15) including the ventilation hole (26) and the outlet (30) for liquid,
- capillary channels (20', 20") disposed in the reservoir (15) and leading to the outlet, and
- shoulders (21, 21") at the ends of the capillary channels (20', 20") in which outlet openings (30') of the outlet (30) for liquid are disposed that have a cross-section smaller than that of the capillary channels (20', 20").

23. Component according to claim 22 wherein the outlet (30) has a connection (22) including an inlet (36) of a displacement chamber (34) having a proportioning outlet (9) for liquid.

24. Component according to claim 22 or 23 wherein the capillary channels (20', 20") are parallel and/or straight-lined.

25. Component according to any one of claims 22 to 24 wherein the outlet openings (30') are centrally oriented towards the capillary channels (20', 20").

26. Component according to any one of claims 22 to 25 wherein a planar basic body (6) has one part of the reservoir (15) on one side and a reservoir lid (7) disposed on this side has another part of the reservoir (15) and the shoulders (21', 21 ") have one part on the basic body (6) and another part on the reservoir lid (7),

27. A microfluidic accumulating and proportioning component according to any one of the preceding claims, comprising:
- the reservoir (15) including the ventilation hole (26) and the outlet (30) for liquid,
- wherein the ventilation hole (26) is disposed at a central location in the reservoir (15) at a distance from reservoir limitation walls so that with arbitrary orientation of the reservoir (15) filled with a maximum admissible liquid volume no liquid exits to the outside through the ventilation hole (26).

28. Component according to claim 27 wherein the outlet (30) of the reservoir (15) has a connection (22) to the inlet (36) of a displacement chamber (34) including a proportioning outlet (9) for liquid.

29. Component according to claim 27 or 28 wherein the reservoir (15) has a part including capillary cavities (20', 20") and a part free from capillary cavities in which the ventilation hole (26) is disposed.

30. Component according to any one of claims 27 to 29 wherein the part of the reservoir (15) which is free from capillary cavities (20', 20") can receive approximately the same liquid volume as the part of the reservoir (15) in which the capillary cavities are.

31. Component according to any one of claims 27 to 30 wherein the ventilation hole (26) has a sharp-edged bordering.

32. Component according to any one of claims 27 to 31 wherein the reservoir (15) is at least partly formed as an indentation (15') in one side of a planar basic body (6) and a spigot (25) protrudes from the bottom of the indentation the free end of which has disposed thereon the ventilation hole (26) from which a ventilation channel (27) extends into the basic body (6) through the spigot (25) and extends to an outwardly leading mouth (10) through the wall of the basic body (6).

33. Component according to claim 32 wherein a reservoir lid (7) is disposed on the side of the basic body (6) including the ventilation hole (26) and which has an indentation (15") defining another part of the reservoir (15).

34. Component according to claim 32 or 33 wherein the ventilation hole (26) is disposed in the separation plane of the basic body (6) and the reservoir lid (7).

35. Component according to any one of claims 32 to 34 wherein the ventilation channel (27) traverses the basic body (6) and has an open portion on the other side of the basic body.

36. Component according to any one of claims 32 to 35 wherein the ventilation channel (27) has the mouth (10) in a face side of the basic body (6) in which also the proportioning outlet (9) leads to.

37. A microfluidic accumulating and proportioning component, according to any one of the preceding claims, comprising:
- the reservoir (15) including the ventilation hole (26),
- the displacement chamber (34) connected to the reservoir (15) including the proportioning outlet (9),
- a body (1) comprising the reservoir (15) and the displacement chamber (34), and
- an inscription flag (13) connected to the body (1) via a bridge (12).

38. Component according to claim 37 wherein the body (1) and the inscription flag (13) are plate-shaped.

39. Component according to claim 37 or 38 wherein the body (1) and the inscription flag (13) are oriented perpendicularly to each other.

40. Component according to any one of claims 37 to 39 wherein a slit (14) is located between the inscription flag (13) and the body (I) to receive a casing portion of a device accommodating the component.

41. A microfluidic accumulating and proportioning component, according to any one of the preceding claims, comprising:
- the reservoir (15) including the ventilation hole (26),
- the displacement chamber (34) connected to the reservoir (15) including the proportioning outlet (9),
- a body (1) in which the reservoir (15) and the displacement chamber (34) arc formed and which has the proportioning outlet (9) and/or a mouth (10) of the ventilation hole (26) in a face side (2), and
- a catch contour (3', 3") formed at the face side (2) including the proportioning outlet.

42. Component according to claim 41 wherein the catch contour (3', 3") is of a dovetail shape.

43. Component according to claim 41 or 42 wherein the catch contour (3', 3") is detachably connected to a closing cap for closing the proportioning outlet (9) and/or the mouth (10) or to an aim-taking aid for directing the proportioning outlet (9) to an object.

44. Component according to any one of claims 1 to 43 wherein the inlet (36) of the displacement chamber (34) has a throttle valve and/or the proportioning outlet (9) has a nozzle.

45. Component according to any one of claims 1 to 44 which is detachably connected to a proportioning device which has an actuator acting on a wall (8) of the displacement chamber (34) of the component to shift the wall and to displace a liquid contained in the displacement chamber (34).

46. Component according to any one of claims 1 to 45 which is detachably connected to a proportioning device which has a filling-level sensor for sensing the filling level in the connection duct (37).

## Revendications

1. Dispositif microfluidique de réservoir et de dosage comprenant
- un réservoir (15) muni d'un orifice de ventilation (26) et d'une sortie (30) située en dessous pour le liquide,
- des cavités capillaires (20', 20") dans le réservoir (15),
- une chambre de refoulement (34) située au moins partiellement au même niveau que le réservoir (15) avec une entrée disposée en haut (36) et une sortie de dosage (9) disposée en bas pour le liquide et
- un canal de montée capillaire (22) reliant la sortie (30) du réservoir (15) à l'entrée (36) de la chambre de refoulement (34).

2. Dispositif selon la revendication 1, dans lequel le réservoir (15) et la chambre de refoulement (34) sont disposés essentiellement au même niveau.

3. Dispositif selon les revendications 1 ou 2, dans lequel les cavités capillaires (20', 20") sont des canaux capillaires conduisant à la sortie (30) du réservoir (15).

4. Dispositif selon une des revendications 1 à 3, dans lequel le canal de montée (22) est relié, via un canal de liaison (37) auquel est attribué un capteur de niveau de remplissage, à l'entrée (36) de la chambre de refoulement (34).

5. Dispositif selon la revendication 4, dans lequel le canal de liaison (37) est disposé entre le niveau le plus élevé du canal de montée (22) et l'entrée (36) de la chambre de refoulement (34).

6. Dispositif selon une des revendications 1 à 5, dans lequel le canal de montée capillaire (22) est solidarisé latéralement via une fente capillaire (31) au réservoir (15), la fente capillaire (31) étant conçue de telle sorte que le liquide s'écoule en mode dosage essentiellement de la sortie (30) du réservoir (15) à travers le canal de montée capillaire (22) dans la chambre de refoulement (34), et en ce que lorsque le dispositif est placé dans un champ centrifuge orienté à l'opposé du sens d'écoulement dans le canal de montée (22) en mode dosage, le liquide s'écoule de la chambre de refoulement (34) et du canal de montée (22) à travers la fente (31) dans le réservoir (15).

7. Dispositif selon la revendication 6, dans lequel la fente capillaire (31) débouche au moins partiellement dans une zone du réservoir (15) au-dessus des cavités capillaires (20', 20").

8. Dispositif selon les revendications 6 ou 7, dans lequel la capillarité de la fente (31) se réduit de bas en haut.

9. Dispositif selon une des revendications 1 à 8, qui comprend dans la partie supérieure un orifice de ventilation (11) relié au réservoir (15).

10. Dispositif selon la revendication 9, dans lequel un canal de remplissage (24) est disposé entre l'orifice de remplissage (11) et le canal de montée (22).

11. Dispositif selon une des revendications 1 à 10, dans lequel le réservoir (15) et la chambre de refoulement (34) sont disposés essentiellement en couches parallèles d'au moins un corps plat (1).

12. Dispositif selon la revendication 11, dans lequel le canal de montée (22) et/ou le canal de remplissage (24) est/sont disposé(s) essentiellement dans la même couche que le réservoir (15), et/ou le canal de liaison (37) essentiellement dans la même couche que la chambre de refoulement (34).

13. Dispositif selon les revendications 11 ou 12, dans lequel le canal de montée (22) et le canal de liaison (37) ou l'entrée (36) de la chambre de refoulement (34) sont reliés entre eux par un passage en sens transversal (23) dudit au moins un corps plat (1).

14. Dispositif selon une des revendications 11 à 13, dans lequel la sortie de dosage (9) est disposée dans une face frontale (2) et/ou l'orifice de remplissage (11) est disposé dans l'autre face frontale (4) dudit au moins un corps plat (1).

15. Dispositif selon une des revendications 11 à 14, dans lequel le réservoir (15) et/ou le canal de montée (22) et/ou le canal de remplissage (24) sont disposés sur une face étendue d'un corps de base plat (6), la chambre de refoulement (34) et/ou le canal de liaison (37) sur l'autre face étendue du corps de base plat (6), le passage transversal (23) est disposé en sens transversal dans le corps de base plat (6), la sortie de dosage (9) est disposée dans une face frontale (2) et/ou l'orifice de remplissage (11) dans l'autre face frontale (4) du corps de base plat (6), et le corps de base (6) est fermé sur la face du réservoir (15) par un couvercle de réservoir (7) et sur la face de la chambre de refoulement (34) par un couvercle de membrane (8).

16. Dispositif selon la revendication 15, dans lequel le couvercle de réservoir (7) contient en partie le réservoir (15) et/ou le canal de montée (22) et/ou le canal de remplissage (24), et/ou le couvercle de membrane (8) contient en partie la chambre de refoulement (34) et/ou le canal de liaison (37).

17. Dispositif microfluidique de réservoir et de dosage selon une des revendications précédentes comprenant
- le réservoir (15) muni de l'orifice de ventilation (26) et de la sortie (30) pour le liquide et
- des canaux capillaires (20', 20") parallèles disposés dans le réservoir (15) conduisant à la sortie (30) du réservoir (15), et des liaisons capillaires (29) qui relient entre eux des canaux capillaires adjacents dirigés transversalement aux canaux capillaires et sont reliées à la sortie (30), la capillarité de ces liaisons étant supérieure à celle des canaux capillaires (20', 20").

18. Dispositif selon la revendication 17, dans lequel la sortie (30) du réservoir (15) présente une liaison (22) avec une entrée (36) d'une chambre de refoulement (34) avec une sortie de dosage (9) pour le liquide.

19. Dispositif selon les revendications 17 ou 18, dans lequel les canaux capillaires (20', 20") sont formés par des lamelles parallèles (18', 18"), et les liaisons capillaires (29) sont formées par des fentes de liaison transversales entre les lamelles (18', 18").

20. Dispositif selon la revendication 19, qui présente un corps de base plat (6) comportant des lamelles (18') dépassant sur une face du fond (17') d'un évidement (15') formant une partie du réservoir (15), et un couvercle de réservoir (7) disposé sur cette face du corps de base (6) qui comporte des lamelles (18") dépassant du fond (17") d'un évidement (15") formant une seconde partie du réservoir (15), les lamelles (18") du corps de base (6) et les lamelles (18") du couvercle de réservoir (7) étant alignées les unes sur les autres, et entre les lamelles (18') du corps de base (6) et les lamelles (18") du couvercle de réservoir (7) existent les liaisons capillaires (29).

21. Dispositif selon la revendication 20, dans lequel les liaisons capillaires (29) sont disposées dans le plan de séparation entre le corps de base (6) et le couvercle de réservoir (7).

22. Dispositif microfluidique de réservoir et de dosage selon une des revendications précédentes comprenant
- le réservoir (15) muni de l'orifice de ventilation (26) et de la sortie (30) pour le liquide,
- des canaux capillaires (20', 20") conduisant à la sortie disposés dans le réservoir (15) et
- des décrochements (21', 21") aux extrémités des canaux capillaires (20', 20"), dans lesquels sont disposés des orifices d'échappement (30') de la sortie (30) pour le liquide, qui présentent une section inférieure à celle des canaux capillaires (20', 20").

23. Dispositif selon la revendication 22, dans lequel la sortie (30) présente une liaison (22) avec une entrée (36) d'une chambre de refoulement (34) avec une sortie de dosage (9) pour le liquide.

24. Dispositif selon les revendications 22 ou 23, dans lequel les canaux capillaires (20', 20") sont parallèles et/ou rectilignes.

25. Dispositif selon une des revendications 22 à 24, dans lequel les orifices d'échappement (30') sont alignés centralement sur les canaux capillaires (20', 20").

26. Dispositif selon une des revendications 22 à 25, dans lequel un corps de base plat (6) comprend sur une face une partie du réservoir (15), et un couvercle de réservoir (7) disposé sur cette face comprend une autre partie du réservoir (15), et les décrochements (21', 21") comportent une partie sur le corps de base (6) et une autre partie sur le couvercle de réservoir (7).

27. Dispositif microfluidique de réservoir et de dosage selon une des revendications précédentes comprenant
- le réservoir (15) comprenant l'orifice de ventilation (26) et la sortie (30) pour le liquide,
- dans lequel l'orifice de ventilation (26) est disposé à un emplacement central du réservoir (15) à une distance des parois de délimitation du réservoir, de telle sorte que lorsqu'on oriente de manière quelconque le réservoir (15) rempli d'une quantité de liquide maximale autorisée, aucun liquide ne s'échappe vers l'extérieur par l'orifice de ventilation (26).

28. Dispositif selon la revendication 27, dans lequel la sortie (30) du réservoir (15) présente une liaison (22) avec une entrée (36) d'une chambre de refoulement (34) avec une sortie de dosage (9) pour le liquide.

29. Dispositif selon les revendications 27 ou 28, dans lequel le réservoir (15) comprend une partie avec des cavités capillaires (20', 20") et une partie exempte de cavités capillaires dans laquelle est disposé l'orifice de ventilation (26).

30. Dispositif selon une des revendications 27 à 29, dans lequel la partie du réservoir (15) qui est exempte de cavités capillaires (20', 20") peut recevoir approximativement le même volume de liquide que la partie du réservoir (15) dans lequel se trouvent les cavités capillaires.

31. Dispositif selon une des revendications 27 à 30, dans lequel l'orifice de ventilation (26) présente un bord à angles vifs.

32. Dispositif selon une des revendications 27 à 31, dans lequel le réservoir (15) est formé au moins partiellement comme un évidement (15') dans une face d'un corps de base plat (6) et un pivot (25) ressort du fond (17') de l'évidement, lequel pivot comporte à son extrémité libre l'orifice de ventilation (26) d'où un canal de ventilation (27) pénètre dans le corps de base (6) en passant par le pivot (25) et traverse la paroi du corps de base (6) pour atteindre un orifice (10) dirigé vers l'extérieur.

33. Dispositif selon la revendication 32, dans lequel un couvercle de réservoir (7) est placé sur la face du corps de base (6) avec l'orifice de ventilation (26) et présente un évidement (15") formant une autre partie du réservoir (15).

34. Dispositif selon les revendications 32 ou 33, dans lequel l'orifice de ventilation (26) est disposé dans le plan de séparation du corps de base (6) et du couvercle de réservoir (7).

35. Dispositif selon une des revendications 32 à 34, dans lequel le canal de ventilation (27) traverse le corps de base (6) et comporte un segment ouvert sur l'autre face du corps de base.

36. Dispositif selon une des revendications 32 à 35, dans lequel le canal de ventilation (27) comporte l'orifice (10) dans une face frontale (2) du corps de base (6) dans lequel débouche également la sortie de dosage (9).

37. Dispositif microfluidique de réservoir et de dosage selon une des revendications précédentes comprenant
- le réservoir (15) avec l'orifice de ventilation (26),
- la chambre de refoulement (34) reliée au réservoir (15) avec une sortie de dosage (9),
- un corps (1) comprenant le réservoir (15) et la chambre de refoulement (34), et
- une étiquette de marquage (13) reliée au corps (1) par une arête (12).

38. Dispositif selon la revendication 37, dans lequel le corps (1) et l'étiquette de marquage (13) sont en forme de plaque.

39. Dispositif selon la revendication 37 ou 38, dans lequel le corps (1) et l'étiquette de marquage (13) sont alignés perpendiculairement l'un à l'autre.

40. Dispositif selon une des revendications 37 à 39, dans lequel existe une fente (14) de logement d'une partie de boîtier d'un appareil recevant le dispositif entre les étiquettes de marquage (13) et le corps (1).

41. Dispositif microfluidique de réservoir et de dosage selon une des revendications précédentes comprenant
- le réservoir (15) avec l'orifice de ventilation (26),
- la chambre de refoulement (34) reliée au réservoir (15) avec la sortie de dosage (9),
- un corps (1) dans lequel sont formés le réservoir (15) et la chambre de refoulement (34), et qui comporte la sortie de dosage (9) et/ou un orifice (10) de l'orifice de ventilation (26) dans une face frontale (2), et
- un contour encliquetable (3', 3") formé sur la face frontale (2) avec la sortie de dosage.

42. Dispositif selon la revendication 41, dans lequel le contour encliquetable (3', 3") est en forme de queue d'aronde.

43. Dispositif selon les revendications 41 ou 42, dans lequel le contour encliquetable (3', 3") est solidarisé de façon amovible à un clapet destiné à fermer l'orifice de dosage (9) et/ou l'orifice (10), ou à une aide ciblée destinée à aligner la sortie de dosage (9) sur un objet.

44. Dispositif selon une des revendications 1 à 43, dans lequel l'entrée (36) de la chambre de refoulement (34) présente un étranglement et/ou la sortie de dosage (9) une buse.

45. Dispositif selon une des revendications 1 à 44, qui est solidarisé de manière amovible à un dispositif de dosage, ayant un actionneur agissant sur une paroi (8) de la chambre de refoulement (34) du dispositif pour déplacer la paroi et pour chasser le liquide contenu dans la chambre de refoulement (34).

46. Dispositif selon une des revendications 1 à 45, qui est solidarisé de manière amovible à un dispositif de dosage présentant un capteur de niveau de remplissage pour détecter le niveau de remplissage dans le canal de liaison (37).
